# EUROPEAN PATENT APPLICATION

(11) **EP 3 521 251 A1**
(43) Date of publication of application: **07.08.2019**
(21) Application number: 17858414.0
(22) Date of filing: 03.10.2017
(51) Int. Cl.: C03C 3/068, C03C 3/15, G02B 1/00

(54) **OPTICAL GLASS, PREFORM, AND OPTICAL ELEMENT**

(30) Priority: 03.10.2016 JP 2016196057; 03.10.2016 JP 2016196058; 10.05.2017 JP 2017094236; 19.06.2017 JP 2017119836; 10.07.2017 JP 2017134938
(71) Applicant: Ohara Inc., Chuo-ku Sagamihara-shi Kanagawa 252-5286 (JP)
(72) Inventor: OGINO Michiko, Sagamihara-shi Kanagawa 252-5286 (JP)
(74) Representative: Hansen, Norbert
(86) International application number: PCT/JP2017/036033
(87) International publication number: WO 2018/066577

(57) **Abstract**

Provided is an optical glass which has optical properties including a high refractive index and high dispersibility, and can contribute to the correction of the influence of the change in temperature on image formation properties. The optical glass contains, in % by mass, a B₂O₃ component in an amount of more than 0% and equal to or less than 35.0%, a Ln₂O₃ component (wherein Ln represents at least one element selected from the group consisting of La, Gd, Y and Yb) in a total amount of 1.0 to 50.0% inclusive, and a BaO component in an amount of 10.0 to 50.0% inclusive, wherein the total mass of TiO₂ + ZrO₂ + WO₃ + Nb₂O₅ + Ta₂O₅ is more than 0% and equal to or less than 50.0%. The optical glass has a refractive index of 1.75 or more and an Abbe's number of 18 to 42 inclusive, wherein the temperature coefficient (40 to 60°C) of a relative refractive index (589.29 nm) falls within the range from +4.0 × 10⁻⁶ to -10.0 × 10⁻⁶ (°C⁻¹).

## Description

### TECHNICAL FIELD

The present invention relates to an optical glass, a preform, and an optical element.

### BACKGROUND ART

In recent years, there has been an increase in the utilization in higher temperature environments of optical elements built into optical devices for vehicles such as vehicle cameras or the like, or optical elements built into optical devices which generate much heat, such as projectors, copy machines, laser printers, broadcast devices and the like. In such high temperature environments, the temperature during use of the optical elements constituting an optical system may greatly fluctuate, and these temperatures may often reach 100°C or more. At such times, the adverse effect on the imaging characteristics and the like of the optical system due to temperature fluctuations becomes so large that it cannot be ignored, and as a result there is demand for constituting optical systems where effect on the imaging characteristics and the like due to temperature fluctuations does not readily occur.

As a material of an optical element constituting an optical system, the demand for high refractive index, high dispersion glass having a refractive index (n_{d}) of 1.75 or more, and an Abbe number (ν_{d}) of 18 to 45 has greatly increased. As such a high refractive index, high dispersion glass, for example, glass compositions such as those represented by Patent Documents 1 to 2 are known.
Patent Document 1: PCT International Publication No. WO2011/065097
Patent Document 2: Japanese Unexamined Patent Application, Publication No. 2007-254197

### DISCLOSURE OF THE INVENTION

### Problems to be Solved by the Invention

When constituting an optical system wherein temperature fluctuations do not readily affect the imaging characteristics and the like, the joint use of an optical element constituted from a glass with a negative temperature coefficient of the relative refractive index, whereby the refractive index becomes lower when the temperature increases, and an optical element constituted from a glass with a positive temperature coefficient of the relative refractive index, whereby the refractive index becomes higher when the temperature increases, is preferable from the point of correcting for the effect on the imaging characteristics and the like due to temperature fluctuations.

In particular, as a high refractive index, high dispersion glass having a refractive index (n_{d}) of 1.75 or more, and an Abbe number (ν_{d}) of 18 to 45, from the viewpoint of contributing to correcting for the effect on the imaging characteristics due to temperature fluctuations, a glass with a low temperature coefficient of the relative refractive index is desired, more specifically, a glass with a negative temperature coefficient of the relative refractive index, or a glass having a small absolute value of the temperature coefficient of the relative refractive index, is desired.

The present invention was made in consideration of the above described problems, and the objective thereof is to provide an optical glass which has the optical characteristics of a high refractive index and high dispersion, and further which has a low value of the temperature coefficient of the relative refractive index, and can contribute to correcting for the effect on imaging characteristics due to temperature fluctuations, and a preform and optical element using the same.

### Means for Solving the Problems

The present inventors, as a result of repeated diligent research in order to solve the above described problems, discovered that by jointly using a B₂O₃ component, a rare earth component, and a BaO component, with at least any of a TiO₂ component, an Nb₂O₅ component, a WO₃ component, a ZrO₂ component, and a Ta₂O₅ component, and adjusting the content of each component, it is possible to obtain a low value of the temperature coefficient of the relative refractive index, while having the desired refractive index and Abbe number, and thereby completed the present invention. Further, the present inventors also discovered that in an optical glass having such a composition and physical properties, it is possible to obtain a high chemical resistance, in particular water resistance. Specifically, the present invention provides the following.
(1) An optical glass comprising, in mass%,
   a B₂O₃ component of more than 0% to 35.0%,
   a total Ln₂O₃ component (wherein Ln is one or more selected from the group consisting of La, Gd, Y, and Yb) of 1.0% to 50.0%,
   a BaO component of 10.0% to 50.0%,
   and comprising
   a mass sum of TiO₂ + ZrO₂ + WO₃ + Nb₂O₅ + Ta₂O₅ of more than 0% to 50.0%, and
   having a refractive index (n_{d}) of 1.75 or more, and an Abbe number (ν_{d}) of 18 to 45, and wherein
   a temperature coefficient (40 to 60°C) of a relative refractive index (589.29 nm), is within the range of +4.0 × 10⁻⁶ to -10.0 × 10⁻⁶ (°C⁻¹).
(2) An optical glass according to (1), wherein, in mass%, a SiO₂ component is 0 to 25.0%,
   a La₂O₃ component is 0 to 45.0%,
   a Gd₂O₃ component is 0 to 23.0%,
   a Y₂O₃ component is 0 to 27.0%,
   a Yb₂O₃ component is 0 to 10.0%,
   a ZrO₂ component is 0 to 15.0%,
   an Nb₂O₅ component is 0 to 20.0%,
   a WO₃ component is 0 to 10.0%,
   a TiO₂ component is 0 to 38.0%,
   a Ta₂O₅ component is 0 to 10.0%,
   a ZnO component is 0 to less than 5.0%,
   an MgO component is 0 to 10.0%,
   a CaO component is 0 to 15.0%,
   an SrO component is 0 to 17.0%,
   a Li₂O component is 0 to 5.0%,
   an Na₂O component is 0 to 10.0%,
   a K₂O component is 0 to 10.0%,
   a P₂O₅ component is 0 to 10.0%,
   a GeO₂ component is 0 to 10.0%,
   an Al₂O₃ component is 0 to 15.0%,
   a Ga₂O₃ component is 0 to 10.0%,
   a Bi₂O₃ component is 0 to 10.0%,
   a TeO₂ component is 0 to 10.0%,
   a SnO₂ component is 0 to 3.0%,
   a Sb₂O₃ component is 0 to 1.0%,
   and
   wherein a content as F of a fluoride partially or completely substituting an oxide of one or two or more of each of the above elements is 0 to 10.0 mass%.
(3) An optical glass according to (1) or (2), wherein a mass sum (SiO₂ + B₂O₃) is 6.0% to 37.0%.
(4) An optical glass according to any one of (1) to (3), wherein a mass ratio (SiO₂ + B₂O₃)/Ln₂O₃ is 0.25 to 3.00 (wherein Ln is one or more selected from the group consisting of La, Gd, Y, and Yb) .
(5) An optical glass according to any one of (1) to (4), wherein a mass ratio BaO/SiO₂ is 0.50 or more.
(6) An optical glass according to any one of (1) to (5), wherein a mass ratio TiO₂/(SiO₂ + B₂O₃) is 0.05 to 3.00.
(7) An optical glass according to any one of (1) to (6), wherein a mass ratio Y₂O₃/Ln₂O₃ is 0.10 to 0.70 (wherein Ln is one or more selected from the group consisting of La, Gd, Y, and Yb).
(8) An optical glass according to any one of (1) to (7), wherein a mass ratio BaO/(SiO₂ + B₂O₃ + ZnO) is more than 0.30 to 4.00.
(9) An optical glass according to any one of (1) to (8), wherein a sum of a content of an RO component (wherein R is one or more selected from the group consisting of Mg, Ca, Sr, Ba, and Zn), in mass%, is 10.0% to 55.0%.
(10) An optical glass according to any one of (1) to (9), wherein a total content of an Rn₂O component (wherein Rn is one or more selected from the group consisting of Li, Na, and K), in mass%, is 10.0% or less.
(11) A preform material consisting of an optical glass according to any one of (1) to (10).
(12) An optical element consisting of an optical glass according to any one of (1) to (10).
(13) An optical device provided with the optical element according to (12).

### Effects of the Invention

According to the present invention, it is possible to obtain an optical glass which has the optical characteristics of a high refractive index and high dispersion, and further has a low value of the temperature coefficient of the relative refractive index, and can contribute to correcting the effect on the imaging characteristics of temperature fluctuations, and a preform and optical element using the same.

Further, according to the present invention, it is also possible to obtain an optical glass which, even while contributing to correcting the effect on the imaging characteristics of temperature fluctuations, does not readily tarnish when cleaning or when polishing the optical glass, and a preform and optical element using the same.

### BRIEF DESCRIPTION OF THE DRAWINGS

Fig. 1 is a figure showing the relationship between the refractive index (n_{d}), and the Abbe number (ν_{d}) of the glasses (No. A1 to No. A60) of the examples of the present invention.
Fig. 2 is a figure showing the relationship between the refractive index (n_{d}), and the Abbe number (ν_{d}) of the glasses (No. B1 to No. B60) of the examples of the present invention.

### PREFERRED MODE FOR CARRYING OUT THE INVENTION

The optical glass of the present invention comprises, in mass%, a B₂O₃ component of more than 0% to 35.0%, a total Ln₂O₃ component (wherein Ln is one or more selected from the group consisting of La, Gd, Y, and Yb) of 1.0% to 50.0%, a BaO component of 10.0% to 50.0%, and comprises a mass sum of TiO₂ + ZrO₂ + WO₃ + Nb₂O₅ + Ta₂O₅ of more than 0% to 50.0%, and has a refractive index (n_{d}) of 1.75 or more, and an Abbe number (ν_{d}) of 18 to 45, and a temperature coefficient (40 to 60°C) of a relative refractive index (589.29 nm) is within the range of +4.0 × 10⁻⁶ to -10.0 × 10⁻⁶ (°C⁻¹).

In particular, the first optical glass comprises, in mass%, a B₂O₃ component of more than 0% to 35.0%, a total Ln₂O₃ component (wherein Ln is one or more selected from the group consisting of La, Gd, Y, and Yb) of 1.0% to 45.0%, a BaO component of 20.0% to 50.0%, and comprises a mass sum of TiO₂ + ZrO₂ + WO₃ + Nb₂O₅ + Ta₂O₅ of more than 0% to 50.0%, and has a refractive index (n_{d}) of 1.75 or more, and an Abbe number (ν_{d}) of 18 to 45, and a temperature coefficient (40 to 60°C) of a relative refractive index (589.29 nm) is within the range of +3.0 × 10⁻⁶ to -10.0 × 10⁻⁶ (°C⁻¹).

Further, the second optical glass comprises, in mass%, a B₂O₃ component of 1.0% to 35.0%, a total Ln₂O₃ component (wherein Ln is one or more selected from the group consisting of La, Gd, Y, and Yb) of 8.0% to 50.0%, a BaO component of 10.0% to 45.0%, and comprises a mass sum of TiO₂ + ZrO₂ + WO₃ + Nb₂O₅ + Ta₂O₅ of 2.0% to 45.0%, and has a refractive index (n_{d}) of 1.75 or more, and an Abbe number (ν_{d}) of 18 to 42, and a temperature coefficient (40 to 60°C) of a relative refractive index (589.29 nm) is within the range of +4.0 × 10⁻⁶ to -10.0 × 10⁻⁶ (°C⁻¹).

The optical glass of the present invention, by jointly using a B₂O₃ component, a rare earth component, and a BaO component, with at least any of a TiO₂ component, an Nb₂O₅ component, a WO₃ component, a ZrO₂ component, and a Ta₂O₅ component, and adjusting the content of each component, can provide a low value of the temperature coefficient of the relative refractive index, while having the desired refractive index and Abbe number. Therefore, it is possible to obtain an optical glass which has the optical characteristics of a high refractive index and high dispersion, and further has a low value of the temperature coefficient of the relative refractive index, and can contribute to correcting the effect on the imaging characteristics of temperature fluctuations.

Further, an optical glass having such a composition and physical properties, can readily have increased chemical resistance, in particular water resistance. Therefore, it is also possible to obtain an optical glass wherein, even while contributing to correcting the effect on the imaging characteristics of temperature fluctuations, tarnish does not readily occur when cleaning or when polishing.

Below, examples of the optical glass of the present invention are explained in detail. The present invention is not in any way limited by the examples below, and can be practiced with the addition of suitable modifications, within the scope of the objective of the present invention. Further, where the explanations overlap, the explanations may be suitably abridged, but this does not limit the intent of the invention.

### [Glass Components]

The compositional range of each component constituting the optical glass of the present invention is explained below. In the present specification, the contents of each component, unless particularly noted, are all shown as mass% with respect to the total mass of an oxide converted composition. Herein, "oxide converted composition" is the composition shown wherein each component comprised in the glass, with a total mass number of the corresponding generated oxides taken as 100 mass%, when the oxides, complex salts, metal fluorides and the like used as raw materials of the glass constituent components of the present invention are all decomposed and converted to oxides when melted.

### <Concerning the Required Components, Optional Components>

The B₂O₃ component is a required component as a glass-forming oxide. In particular, by comprising more than 0% of the B₂O₃ component, it is possible to reduce devitrification of the glass. Accordingly, the content of the B₂O₃ component is preferably more than 0%, more preferably 1.0% or more, more preferably more than 1.0%, even more preferably 2.0% or more, even more preferably 3.0% or more, even more preferably more than 3.0%, even more preferably more than 4.0%, even more preferably more than 5.0%, even more preferably more than 6.0%, even more preferably more than 8.0%. In particular the first optical glass may have a content of the B₂O₃ component of more than 9.0%, and may be 12.0% or more. On the other hand, by making the content of the B₂O₃ component 35.0% or less, an even larger refractive index is readily obtained, the temperature coefficient of the relative refractive index can be made small, and further, deterioration of the chemical resistance can be suppressed. Accordingly, the content of the B₂O₃ component is preferably 35.0% or less, more preferably 30.0% or less, even more preferably 25.0% or less, even more preferably less than 20.0%, even more preferably less than 18.0%, and even more preferably less than 15.0%. In particular, the second optical glass may have a content of the B₂O₃ component of less than 12.0%, and may be less than 10.5%.

The total content (mass sum) of the rare earth component, namely the Ln₂O₃ component (wherein Ln is one or more selected from the group consisting of La, Gd, Y, and Yb) is preferably 1.0% or more. In this way, it is possible to increase the refractive index of the glass, and to readily obtain a glass having the desired refractive index and Abbe number. Further, the chemical resistance, in particular the water resistance of the glass, can be increased. Accordingly, the content of the Ln₂O₃ component is preferably 1.0% or more, more preferably 4.0% or more, even more preferably 7.0% or more, even more preferably 8.0% or more, even more preferably more than 10.0%, even more preferably more than 13.0%, even more preferably more than 15.0%, even more preferably 16.8% or more, even more preferably more than 17.0%, even more preferably more than 20.0%, even more preferably more than 23.7%, and even more preferably more than 25.0%. In particular, the second optical glass may have a mass total of the Ln₂O₃ component of more than 30.0%, more preferably more than 33.0%. On the other hand, by making this total 50.0% or less, because the liquidus temperature of the glass is lowered, devitrification of the glass can be reduced. Further, it is possible to suppress greater than necessary increases of the Abbe number. Accordingly, the mass sum of the Ln₂O₃ component is preferably 50.0% or less, more preferably 48.0% or less, preferably 45.0% or less, even more preferably less than 45.0%, even more preferably less than 42.0%, even more preferably 40.0% or less, even more preferably less than 40.0%, even more preferably 39.0% or less, and even more preferably less than 36.0%. In particular, the first optical glass may have a mass sum of the Ln₂O₃ component of less than 32.0%, more preferably less than 30.0% .

The BaO component is a required component which can increase the fusibility of the glass raw material, reduce the devitrification of the glass, increase the refractive index, and can make the temperature coefficient of the relative refractive index small. Accordingly, the content of the BaO component is preferably 10.0% or more, more preferably more than 13.0%, even more preferably more than 15.0%, even more preferably more than 17.0%, even more preferably more than 18.0%, even more preferably 20.0% or more, even more preferably more than 20.0%, even more preferably more than 22.0%, even more preferably more than 23.0%, even more preferably more than 25.0%, and even more preferably more than 28.0%. In particular, the first optical glass may have a content of the BaO component of more than 30.0%, and may be more than 31.0%, and may be more than 31.4%. On the other hand, by making the content of the BaO component 50.0% or less, reduction of the refractive index due to excessive content, or reduction of the chemical resistance (water resistance), and devitrification can be reduced. Accordingly, the content of the BaO component is preferably 50.0% or less, more preferably 45.0% or less, even more preferably less than 40.0% or less, even more preferably 38.0% or less, even more preferably 37.0% or less, and even more preferably less than 35.0%. In particular, the second optical glass may have a content of the BaO component of less than 32.0%, and may be less than 30.0%.

A total mass (mass sum) of the TiO₂ component, ZrO₂ component, WO₃ component, Nb₂O₅ component, and Ta₂O₅ component is preferably greater than 0%. In this way, is it possible to increase the refractive index of the glass, and the desired high refractive index can be obtained. Accordingly, a mass sum of TiO₂ + ZrO₂ + WO₃ + Nb₂O₅ + Ta₂O₅ is preferably greater than 0%, more preferably greater than 1.0%, even more preferably 2.0% or more, even more preferably 5.0% or more, even more preferably 8.0% or more, even more preferably more than 9.0%, even more preferably 10.0% or more, and even more preferably 12.0% or more. On the other hand, this sum is preferably 50.0% or less. In this way, the stability of the glass can be increased. Accordingly, a mass sum of TiO₂ + ZrO₂ + WO₃ + Nb₂O₅ + Ta₂O₅ is preferably 50.0% or less, more preferably 45.0% or less, even more preferably less than 45.0%, even more preferably less than 43.0%, less than 42.0%, even more preferably less than 40.0%, even more preferably less than 35.0%, even more preferably less than 34.0%, even more preferably less than 30.0%, and even more preferably less than 27.0%.

The SiO₂ component is a component optionally used as a glass-forming oxide. In particular, by comprising more than 0% of the SiO₂ component, it is possible to increase the chemical resistance, in particular the water resistance, to increase the viscosity of the molten glass, and to reduce the coloration of the glass. Further, the stability of the glass is increased, and a glass which tolerates mass production can be readily obtained. Accordingly, the content of the SiO₂ component is preferably more than 0%, more preferably more than 1.0%, even more preferably more than 3.0%, even more preferably more than 4.0%, even more preferably more than 6.0%, even more preferably more than 7.0%, and even more preferably more than 8.0%. On the other hand, by making the content of the SiO₂ component 25.0% or less, the temperature coefficient of the relative refractive index can be made small, an increase in the glass transition point can be suppressed, and further, a reduction in the refractive index can be suppressed. Accordingly, the content of the SiO₂ component is preferably 25.0% or less, more preferably less than 23.0%, even more preferably less than 22.0%, more preferably 22.0% or less, even more preferably less than 22.0%, even more preferably less than 20.0%, even more preferably less than 17.0%, even more preferably less than 16.0%, even more preferably less than 15.0%, even more preferably less than 14.0%, even more preferably less than 13.0%, even more preferably less than 12.0%, and even more preferably less than 10.0%.

The La₂O₃ component is an optional component which, if having a content of more than 0%, can increase the refractive index of the glass. Accordingly, the content of the La₂O₃ component is preferably more than 0%, more preferably more than 1.0%, even more preferably 3.0% or more, even more preferably more than 6.0%, even more preferably more than 7.0%, even more preferably more than 10.0%, even more preferably 12.0% or more, even more preferably more than 13.0%, even more preferably more than 14.0%, even more preferably more than 17.0%, even more preferably 20.0% or more, and even more preferably more than 20.0%. On the other hand, by making the content of the La₂O₃ component 45.0% or less, devitrification can be reduced by increasing the stability of the glass, and it is possible to suppress an increase in the Abbe number. Further, the fusibility of the glass raw materials can be increased. Accordingly, the content of the La₂O₃ component is preferably 45.0% or less, more preferably less than 41.0%, even more preferably less than 38.0%, even more preferably 37.0% or less, even more preferably less than 36.0%, even more preferably less than 35.1%, even more preferably less than 34.0%, even more preferably less than 33.0%, even more preferably less than 31.0%, and even more preferably less than 28.0%.

The Gd₂O₃ component and Yb₂O₃ component are optional components which, if having a content of more than 0%, can increase the refractive index of the glass. On the other hand, the Gd₂O₃ component and Yb₂O₃ component are costly materials even among rare earth elements, and if the content thereof is high, the production costs will increase. Further, by reducing the Gd₂O₃ component and Yb₂O₃ component, an increase of the Abbe number of the glass can be suppressed. Accordingly, the content of the Gd₂O₃ component may be preferably 23.0% or less, more preferably less than 20.0%, even more preferably 15.0% or less, even more preferably less than 15.0%, even more preferably 10.0% or less, even more preferably less than 10.0%, even more preferably less than 9.0%, even more preferably less than 5.0%, and even more preferably less than 3.0%. Further, the content of the Yb₂O₃ component may be preferably 10.0% or less, more preferably less than 6.0%, even more preferably less than 3.0%, and even more preferably 1.0% or less.

The Y₂O₃ component is an optional component which, if having a content of more than 0%, can suppress raw material costs of the glass compared to other rare earth elements while maintaining a high refractive index. Accordingly, the content of the Y₂O₃ component may be preferably more than 0%, more preferably 0.4% or more, even more preferably 1.0% or more, even more preferably more than 1.0%, even more preferably 2.0% or more, and even more preferably more than 4.0%. In particular, in the second optical glass, the content of the Y₂O₃ component may be more than 7.0%, and may be more than 10.0%. On the other hand, by making the content of the Y₂O₃ component 27.0% or less, it is possible to suppress a reduction of the refractive index of the glass, suppress an increase of the Abbe number of the glass, and further increase the stability of the glass. Further, degradation of the fusibility of the glass raw materials can be suppressed. Accordingly, the content of the Y₂O₃ component may be preferably 27.0% or less, more preferably 25.0% or less, even more preferably less than 25.0%, even more preferably less than 20.0%, even more preferably less than 18.0%, and even more preferably 15.0% or less. In particular, in the first optical glass, the content of the Y₂O₃ component may be less than 10.0%, and may be 5.0% or less, and may be less than 3.5%.

In particular, in the optical glass of the present invention, by comprising a Y₂O₃ component, and further by reducing the content of the ZnO component, it is possible to reduce the specific gravity of the glass, while making the temperature coefficient of the relative refractive index small.

The ZrO₂ component is an optional component which, if having a content of more than 0%, can increase the refractive index of the glass, and further can reduce the devitrification. Accordingly, the content of the ZrO₂ component may be preferably more than 0%, more preferably more than 1.0%, even more preferably more than 2.0%, and even more preferably 3.0% or more. On the other hand, by making the content of the ZrO₂ component 15.0% or less, the temperature coefficient of the relative refractive index can be made small, and devitrification due to excessive content of the ZrO₂ component can be reduced. Accordingly, the content of the ZrO₂ component may be preferably 15.0% or less, more preferably less than 10.0%, even more preferably 8.0% or less, even more preferably 7.0% or less, even more preferably less than 6.0%, and even more preferably less than 5.0%.

The Nb₂O₅ component is an optional component which, if having a content of more than 0%, can increase the refractive index of the glass, can reduce the Abbe number, and further can increase the devitrification resistance of the glass by reducing the liquidus temperature of the glass. Accordingly, the content of the Nb₂O₅ component may be preferably more than 0%, more preferably more than 1.0%, and even more preferably 2.0% or more. On the other hand, by making the content of the Nb₂O₅ component 20.0% or less, the temperature coefficient of the relative refractive index can be made small, devitrification due to excessive content of the Nb₂O₅ component can be reduced, and further, a reduction of the transmittance with respect to visible light (in particular wavelengths of 500 nm or less) of the glass can be suppressed. Accordingly, the content of the Nb₂O₅ component may be preferably 20.0% or less, more preferably 17.0% or less, even more preferably 15.0% or less, even more preferably less than 10.0%, even more preferably less than 8.0%, even more preferably less than 7.0%, even more preferably less than 5.0%, even more preferably less than 3.0%, and even more preferably less than 2.5%.

The WO₃ component is an optional component which, if having a content of more than 0%, can increase the refractive index, can lower the Abbe number, and reduce the glass transition point of the glass, while reducing coloration of the glass due to other high refractive index components, and can further reduce devitrification. Accordingly, the content of the WO₃ component may be preferably more than 0%, more preferably more than 0.3%, even more preferably more than 0.5%, and even more preferably more than 0.7%. On the other hand, by making the content of the WO₃ component 10.0% or less, the temperature coefficient of the relative refractive index can be made small, and further the material costs can be suppressed. Further, the coloration of the glass due to the WO₃ component can be reduced and the visible light transmittance can be increased. Accordingly, the content of the WO₃ component may be preferably 10.0% or less, more preferably less than 5.0%, even more preferably less than 3.0%, even more preferably less than 1.5%, and even more preferably less than 1.0%.

The TiO₂ component is an optional component which, if having a content of more than 0%, can increase the refractive index of the glass, and further, can reduce the devitrification of the glass. Accordingly, the content of the TiO₂ component may be preferably more than 0%, more preferably more than 1.0%, even more preferably more than 3.5%, even more preferably more than 5.0%, even more preferably more than 6.0%, and even more preferably more than 6.5%. On the other hand, by making the content of the TiO₂ component 38.0% or less, the temperature coefficient of the relative refractive index can be made small, devitrification due to excessive content of the TiO₂ component can be reduced, and a reduction of the transmittance with respect to visible light (in particular wavelengths of 500 nm or less) of the glass can be suppressed. Accordingly, the content of the TiO₂ component may be preferably 38.0% or less, more preferably 35.0% or less, even more preferably 30.0% or less, even more preferably less than 30.0%, even more preferably 28.0% or less, even more preferably less than 25.0%, even more preferably 24.0% or less, even more preferably less than 21.0%, even more preferably less than 18.0%, even more preferably less than 15.0%, even more preferably less than 13.0%, and even more preferably less than 10.0%.

The Ta₂O₅ component is an optional component which, if having a content of more than 0%, can increase the refractive index of the glass, and further, can increase the devitrification resistance. On the other hand, by making the content of the Ta₂O₅ component 10.0% or less, the raw material cost of the optical glass can be reduced, and further, the melting temperature of the raw materials can be lowered, and the energy required to melt the raw materials can be reduced, whereby the production cost of the optical glass can be reduced. Accordingly, the content of the Ta₂O₅ component may be preferably 10.0% or less, more preferably less than 7.0%, even more preferably less than 5.0%, even more preferably less than 2.0%, and even more preferably less than 1.0%. In particular, from the viewpoint of reducing material costs, it is most preferably that the Ta₂O₅ component is not comprised.

The ZnO component is an optional component which, if having a content of more than 0%, can increase the fusibility of the raw materials, can promote degassing from the molten glass, and further, can increase the stability of the glass. Further, it is a component which can reduce the glass transition point and further improve the chemical resistance. On the other hand, by making the content of the ZnO component less than 5.0%, the temperature coefficient of the relative refractive index can be made small, expansion due to heating can be reduced, lowering of the refractive index can be suppressed, and further, devitrification due to excessive lowering of the viscosity can be reduced. Accordingly, the content of the ZnO component may be preferably less than 5.0%, more preferably less than 4.0%, even more preferably less than 2.0%, even more preferably less than 1.0%, and even more preferably less than 0.5%.

The MgO component, CaO component, and SrO component are optional components, and when having a content of more than 0%, the refractive index and fusibility and devitrification resistance of the glass can be adjusted. On the other hand, by making the content of the MgO component 10.0% or less, or the content of the CaO component 15.0% or less, or the content of the SrO component 17.0% or less, it is possible to suppress reduction of the refractive index, and further it is possible to reduce devitrification due to excessive contents of these components. Accordingly, the content of the MgO component is preferably 10.0% or less, more preferably 5.0% or less, even more preferably less than 3.0%, and even more preferably less than 1.0%. Further, the content of the CaO component is preferably 15.0% or less, more preferably 13.0% or less, even more preferably 10.0% or less, even more preferably less than 6.5%, even more preferably less than 4.0%, and even more preferably less than 2.0%. Further, the content of the SrO component is preferably 17.0% or less, more preferably 15.0% or less, even more preferably 13.0% or less, even more preferably 10.0% or less, even more preferably less than 6.5%, even more preferably less than 4.0%, and even more preferably less than 2.0%.

The Li₂O component, Na₂O component, and K₂O component are optional components which, if having a content of more than 0%, can improve the fusibility of the glass, and can lower the glass transition point. In particular, if the K₂O component has a content of more than 0%, the temperature coefficient of the relative refractive index can be made small. On the other hand, by reducing the content of the Li₂O component, Na₂O component, and K₂O component, the refractive index of the glass is not readily reduced, and further it is possible to reduce the devitrification of the glass. Further, by reducing the content of the Li₂O component in particular, the viscosity of the glass can be increased, and the striation of the glass can be reduced. Accordingly, the content of the Li₂O component may be preferably 5.0% or less, more preferably less than 3.0%, even more preferably 1.0% or less, and even more preferably less than 0.3%. Further, the content of the Na₂O component may be preferably 10.0% or less, more preferably less than 5.0%, even more preferably less than 3.0%, and even more preferably less than 1.0%. Further, the content of the K₂O component may be preferably 10.0% or less, more preferably less than 7.0%, even more preferably less than 4.0%, even more preferably less than 3.0%, even more preferably less than 2.0%, and even more preferably 1.0% or less.

The P₂O₅ component is an optional component which, if having a content of more than 0%, can reduce the liquidus temperature of the glass and increase the devitrification resistance. On the other hand, by making the content of the P₂O₅ component 10.0% or less, a reduction in the chemical resistance of the glass, in particular the water resistance, can be suppressed. Accordingly, the content of the P₂O₅ component may be preferably 10.0% or less, more preferably less than 5.0%, even more preferably less than 3.0%, even more preferably less than 1.0%, and the P₂O₅ component may not be included.

The GeO₂ component is an optional component which, if having a content of more than 0%, can increase the refractive index of the glass, and further, can improve the devitrification resistance. However, GeO₂ has a high raw material cost, and if the content thereof is high, the production costs increase. Accordingly, the content of the GeO₂ component may be preferably 10.0% or less, more preferably less than 5.0%, even more preferably less than 3.0%, even more preferably less than 1.0%, and even more preferably less than 0.1%.

The Al₂O₃ component and the Ga₂O₃ component are optional components which, if having a content of more than 0%, can improve the devitrification resistance of the molten glass. Therefore, in particular the content of the Al₂O₃ component may be preferably more than 0%, more preferably more than 0.5%, and even more preferably more than 1.0%. On the other hand, by making the content of the Al₂O₃ component 15.0% or less, or the content of the Ga₂O₃ component 10.0% or less, the liquidus temperature of the glass can be reduced, and the devitrification resistance can be increased. Accordingly, the content of the Al₂O₃ component may be preferably 15.0% or less, more preferably 10.0% or less, even more preferably less than 10.0%, even more preferably less than 6.0%, even more preferably less than 5.0%, even more preferably less than 3.0%, even more preferably 1.0% or less, and even more preferably less than 1.0%. Further, the content of the Ga₂O₃ component is preferably 10.0% or less, more preferably less than 5.0%, even more preferably less than 3.0%, and even more preferably less than 1.0%.

The Bi₂O₃ component is an optional component which, if having a content of more than 0%, can increase the refractive index of the glass, can reduce the Abbe number, and further, can lower the glass transition point. On the other hand, by making the content of the Bi₂O₃ component 10.0% or less, the liquidus temperature of the glass can be lowered, and the devitrification resistance can be increased. Accordingly, the content of the Bi₂O₃ component may be preferably 10.0% or less, more preferably less than 5.0%, even more preferably less than 3.0%, and even more preferably less than 1.0%.

The TeO₂ component is an optional component which, if having a content of more than 0%, can increase the refractive index of the glass, and further, can lower the glass transition point. On the other hand, the TeO₂ component has the problem that it may alloy with the platinum when melting the glass raw materials in a platinum crucible or a melt tank which has components which contact the molten glass formed of platinum. Accordingly, the content of the TeO₂ component may be preferably 10.0% or less, more preferably less than 5.0%, even more preferably less than 3.0%, and even more preferably less than 1.0%.

The SnO₂ component is an optional component which, if having a content of more than 0%, can clarify and decrease the oxides of the molten glass, and further, can increase the visible light transmittance of the glass. On the other hand, by making the content of the SnO₂ component 3.0% or less, coloration of the glass due to reduction of the molten glass, or devitrification of the glass can be reduced. Further, because alloying between the SnO₂ component and the melting equipment (in particular precious metals such as Pt and the like) can be reduced, it is possible to obtain longer lifetime of the melting equipment. Accordingly, the content of the SnO₂ component is preferably 3.0% or less, more preferably less than 1.0%, even more preferably less than 0.5%, and even more preferably less than 0.1%.

The Sb₂O₃ component is an optional component which, if having a content of more than 0%, can degas the molten glass. On the other hand, by making the content of the SnO₂ component 1.0% or less, reduction of the transmittance in the short wavelength region of the visible light region, or solarization or reduction of the quality of the inner portion of the glass can be suppressed. Accordingly, the content of the SnO₂ component may be preferably 1.0% or less, more preferably less than 0.5%, and even more preferably less than 0.2%.

In particular, in the second optical glass, by comprising a Y₂O₃ component, and further reducing the content of the Sb₂O₃ component, it is possible to reduce the formation of nodes in the glass (the generation of foreign substances, minute bubbles, or minute crystals), while making the temperature coefficient of the relative refractive index small.

Further, a component which clarifies and degases the glass is not limited to the above-described Sb₂O₃ component, and well-known clarifying agents and degassing agents in the field of glass production, or combinations thereof, may be used.

The F component is an optional component which, if having a content of more than 0%, can increase the Abbe number of the glass, lower the glass transition point, and further increase the devitrification resistance. However, if the content of the F component, namely the total amount as F of a fluoride partially or completely substituting an oxide of one or two or more of each of the above described metal elements, is more than 10.0%, the volatilization of the F component becomes large, and it becomes difficult to obtain stable optical constants, and it becomes difficult to obtain a homogenous glass. Further, the Abbe number is increased more than necessary. Accordingly, the content of the F component may be preferably 10.0% or less, more preferably less than 5.0%, even more preferably less than 3.0%, and even more preferably less than 1.0%.

The total amount of the SiO₂ component and the B₂O₃ component is preferably 6.0% or more. In this way, a stable glass is easily obtained. Accordingly, the mass sum (SiO₂ + B₂O₃) is preferably 6.0% or more, more preferably 7.0% or more, even more preferably 9.0% or more, even more preferably more than 10.0%, even more preferably more than 12.0%, even more preferably more than 15.0%, even more preferably 16.0% or more, even more preferably more than 16.0%, even more preferably more than 17.0%, even more preferably more than 19.0%, and even more preferably more than 20.0%. On the other hand, by making the total amount 37.0% or less, the temperature coefficient of the relative refractive index can be made small. Accordingly, the mass sum (SiO₂ + B₂O₃) is preferably 37.0% or less, more preferably 35.0% or less, even more preferably 34.0% or less, even more preferably less than 33.0%, even more preferably less than 30.0%, even more preferably less than 28.0%, even more preferably 25.5% or less, and even more preferably 25.0% or less.

A ratio (mass ratio) of the total content of the SiO₂ component and B₂O₃ component, with respect to a total content of the Ln₂O₃ component (wherein Ln is one or more selected from the group consisting of La, Gd, Y, and Yb) is preferably 0.25 or more. By making this ratio large, the refractive index of the glass can be made high. Accordingly, the mass ratio (SiO₂ + B₂O₃)/Ln₂O₃ is preferably 0.25 or more, more preferably 0.35 or more, even more preferably 0.45 or more, even more preferably 0.56 or more, and even more preferably 0.67 or more. On the other hand, from the viewpoint of obtaining a stable glass, this mass ratio is preferably 3.00 or less, more preferably 2.00 or less, even more preferably less than 1.50, and even more preferably less than 1.20.

A ratio (mass ratio) of the content of the BaO component, with respect to the content of the SiO₂ component, is preferably 0.50 or more. By making this ratio large, the temperature coefficient of the relative refractive index can be made small, and the chemical resistance can be increased. Accordingly, the mass ratio BaO/SiO₂ is preferably 0.50 or more, more preferably 0.80 or more, even more preferably more than 1.00, even more preferably more than 1.30, even more preferably 1.50 or more, even more preferably more than 1.50, even more preferably 1.70 or more, even more preferably 1.80 or more, even more preferably more than 2.00, even more preferably 2.10 or more, even more preferably 2.40 or more, even more preferably 2.50 or more, and even more preferably 2.80 or more. On the other hand, the upper limit of the mass ratio BaO/SiO₂ may be infinite (an SiO₂ content of 0%), but from the viewpoint of obtaining a stable glass, it may be preferably 10.00 or less, more preferably less than 7.00, even more preferably 5.00 or less, even more preferably less than 5.00, even more preferably less than 4.00, and even more preferably less than 3.50.

A ratio (mass ratio) of the content of the TiO₂ component, with respect to the total content of the SiO₂ component and B₂O₃ component, is preferably 0.05 or more. By making this ratio large, the temperature coefficient of the relative refractive index can be made small, and the material cost of the glass can be reduced. Accordingly, the mass ratio TiO₂/(SiO₂ + B₂O₃) is preferably 0.05 or more, more preferably 0.10 or more, even more preferably more than 0.20, and even more preferably more than 0.25. On the other hand, from the viewpoint of obtaining a stable glass, this ratio may be preferably 3.00 or less, more preferably less than 2.00, even more preferably less than 1.70, even more preferably less than 1.40, and even more preferably less than 1.10.

The total mass of Gd₂O₃ and Y₂O₃ may be 0%, but is preferably more than 0% to 27.0%. In this way, a stable glass is readily obtained. Accordingly, a mass sum (Gd₂O₃ + Y₂O₃) may be preferably more than 0%, more preferably more than 1.0%, even more preferably more than 4.0%, even more preferably more than 7.00%, and even more preferably more than 10.0%. On the other hand, by making this total amount 27.0% or less, an increase in the Abbe number of the glass can be suppressed. Accordingly, the mass sum (Gd₂O₃ + Y₂O₃) may be preferably 27.0% or less, more preferably less than 25.0%, even more preferably less than 20.0%, even more preferably less than 18.0%, and even more preferably 15.0% or less.

A ratio (mass ratio) of the content of Y₂O₃ with respect to the total content of the Ln₂O₃ component (wherein Ln is one or more selected from the group consisting of La, Gd, Y, and Yb) may be 0, but is preferably greater than 0. By making this ratio large, the specific gravity of the glass can be made small, and the material cost can be reduced. Accordingly, the mass ratio Y₂O₃/Ln₂O₃ is preferably more than 0, more preferably 0.01 or more, even more preferably more than 0.02, even more preferably more than 0.04, even more preferably 0.06 or more, even more preferably more than 0.10, and even more preferably more than 0.15. On the other hand, from the viewpoint of obtaining a glass with a higher refractive index, and high stability, this mass ratio Y₂O₃/Ln₂O₃ may be preferably 0.60 or less, more preferably 0.50 or less, even more preferably less than 0.40, and even more preferably less than 0.35.

A ratio of the content of the BaO component with respect to a total content of the SiO₂ component, B₂O₃ component, and ZnO component is preferably more than 0.30. By making this ratio large, the temperature coefficient of the relative refractive index can be made small. Accordingly, the mass ratio BaO/(SiO₂ + B₂O₃ + ZnO) is preferably more than 0.30, more preferably more than 0.40, even more preferably more than 0.50, even more preferably more than 0.60, even more preferably more than 0.80, even more preferably 0.95 or more, and even more preferably more than 1.00. In the first optical glass, the mass ratio BaO/(SiO₂ + B₂O₃ + ZnO) may be more than 1.25, may be more than 1.30, and may be 1.47 or more. On the other hand, from the viewpoint of obtaining a stable glass, this mass ratio BaO/(SiO₂ + B₂O₃ + ZnO) may be preferably 4.00 or less, more preferably 3.50 or less, even more preferably 3.00 or less, even more preferably less than 2.50, even more preferably less than 2.00, even more preferably less than 1.80, even more preferably 1.65 or less, and even more preferably less than 1.60. In particular, in the second optical glass, the mass ratio BaO/(SiO₂ + B₂O₃ + ZnO) may be less than 1.40.

A sum (mass sum) of the content of the RO component (wherein R is one or more selected from the group consisting of Mg, Ca, Sr, Ba, and Zn) is preferably 10.0% or more. In this way, the devitrification of the glass can be reduced, and further, the temperature coefficient of the relative refractive index can be made small. Accordingly, the mass sum of the RO component is preferably 10.0% or more, more preferably more than 14.0%, even more preferably more than 16.0%, even more preferably more than 17.0%, even more preferably more than 18.0%, even more preferably 20.0% or more, even more preferably more than 20.0%, even more preferably more than 23.0%, even more preferably more than 24.0%, and even more preferably more than 28.0%. In particular, in the first optical glass the mass sum of the RO component may be more than 30.0%, and may be more than 32.0%. On the other hand, by making the mass sum of the RO component 55.0% or less, reductions in the refractive index can be suppressed, and further, the stability of the glass can be increased. Accordingly, the mass sum of the RO component is preferably 55.0% or less, more preferably 50.0% or less, even more preferably 45.0% or less, even more preferably less than 42.0%, even more preferably less than 40.0%, even more preferably 38.0% or less, even more preferably 37.0% or less, and even more preferably less than 35.0%. In particular, in the second optical glass, the mass sum of the RO component may be less than 32.0%, and may be less than 30.0%.

A sum (mass sum) of the content of the Rn₂O component (wherein Rn is one or more selected from the group consisting of Li, Na, and K) is preferably 10.0% or less. In this way, reductions in the viscosity of the molten glass can be suppressed, the refractive index of the glass is not readily reduced, and further, devitrification of the glass can be reduced. Accordingly, the mass sum of the Rn₂O component is preferably 10.0% or less, more preferably less than 7.0%, even more preferably less than 4.0%, even more preferably less than 2.0%, and even more preferably 1.0% or less.

### <Concerning the Components Which Should Not Be Contained>

Next, components which should not be included and components which are preferably not included in the optical glass of the present invention are explained.

Other components may be added as required within a range which does not harm the characteristics of the glass of the present invention. However, excluding Ti, Zr, Nb, W, La, Gd, Y, Yb, and Lu, various transition metal components of V, Cr, Mn, Fe, Co, Ni, Cu, Ag, Mo, and the like, even if respectively contained individually or combination in small amounts, have the property of coloring the glass, and giving rise to absorbance of specified wavelengths in the visible range, and therefore, in particular for optical glass used for wavelengths in the visible region, these are preferably substantially not included.

Further, lead compounds such as PbO and the like, and arsenic compounds such as As₂O₃ and the like are components having a high environmental burden, and therefore should substantially not be included, namely, they are desirably not included at all except for unavoidable impurities.

Furthermore, in recent years there has been a tendency to avoid use of all of the components of Th, Cd, Tl, Os, Be, and Se as harmful chemical materials, and steps for environmental measures are required not only in the production steps of the glass, but also in the processing steps, up until the disposal after having made the product. Accordingly, in the case of focusing on environmental impact, it is preferable that these are substantially not included.

### [Production Method]

The optical glass of the present invention is manufactured, for example by a method such as the following. Namely, it is produced by uniformly mixing as raw materials of each of the above components, high purity raw materials usually used for optical glass such as oxides, hydroxides, carbonates, nitrates, fluorides, hydroxides, metaphosphates and the like, so that the each component is within the predetermined content range, charging the produced mixture into a platinum crucible, and after melting for 1 to 10 hours in a temperature range of 900 to 1500°C in an electric furnace in accordance with the degree of ease of melting the glass raw materials, with stirring and homogenizing, the temperature is lowered to a suitable level, casting in a mold, and annealing.

### <Properties>

The optical glass of the present invention has a high refractive index and a low Abbe number (low dispersion). In particular, the refractive index (n_{d}) of the optical glass of the present invention preferably has a lower limit of 1.75, more preferably 1.77, even more preferably 1.78, even more preferably 1.80, even more preferably 1.85, and even more preferably 1.88. This refractive index (n_{d}) may have an upper limit of preferably 2.10, more preferably 2.00, even more preferably 1.97, and even more preferably 1.90. Further, the Abbe number (ν_{d}) of the optical glass of the present invention preferably has a lower limit of 18, more preferably 20, even more preferably 23, even more preferably 26, even more preferably 29, even more preferably 30, and even more preferably 32. This Abbe number (ν_{d}) preferably has an upper limit of 45, more preferably 43, even more preferably 42, even more preferably 41, even more preferably 40, and even more preferably 35. By having such a high refractive index, even when designing thinner optical elements, it is possible to obtain a large diffraction amount of light. Further, by having such a high dispersion, the focus point according to the wavelength of the light when using a single lens can be suitably shifted. Therefore, for example when constituting an optical system by combining with optical elements having a low dispersion (high Abbe number), it is possible to reduce aberrations of this optical system as a whole and design for high imaging characteristics and the like. In such a way, the optical glass of the present invention is useful for optical design, and in particular, when constituting an optical system, it is possible to design size reduction of the optical system even while designing high imaging characteristics and the like, and it is possible to broaden the degree of freedom in optical design.

Herein, in the optical glass of the present invention the refractive index (n_{d}) and the Abbe number (ν_{d}) preferably satisfy the relationship (-0.0112ν_{d} + 2.15) ≤ n_{d} ≤ (-0.0112ν_{d} + 2.35). In the glass with the composition specified by the present invention, by satisfying this relationship between the refractive index (n_{d}) and the Abbe number (ν_{d}), a more stable glass can be obtained. Accordingly, in the optical glass of the present invention, the refractive index (n_{d}) and the Abbe number (ν_{d}) preferably satisfy the relationship n_{d} ≥ (-0.0112ν_{d} + 2.15), more preferably satisfy the relationship n_{d} ≥ (-0.0112ν_{d} + 2.17), even more preferably satisfy the relationship n_{d} ≥ (-0.0112ν_{d} + 2.18), even more preferably satisfy the relationship n_{d} ≥ (-0.0112ν_{d} + 2.20), even more preferably satisfy the relationship n_{d} ≥ (-0.0112ν_{d} + 2.21), and even more preferably satisfy the relationship n_{d} ≥ (-0.0112ν_{d} + 2.22). On the other hand, in the optical glass of the present invention, the refractive index (n_{d}) and the Abbe number (ν_{d}) preferably satisfy the relationship n_{d} ≤ (-0.0112ν_{d} + 2.35), more preferably satisfy the relationship n_{d} ≤ (-0.0112ν_{d} + 2.30), even more preferably satisfy the relationship n_{d} ≤ (-0.0112ν_{d} + 2.28), even more preferably satisfy the relationship n_{d} ≤ (-0.0112ν_{d} + 2.27), and even more preferably satisfy the relationship n_{d} ≤ (-0.0112ν_{d} + 2.25).

The optical glass of the present invention has a low value of the temperature coefficient of the relative refractive index (dn/dT). More specifically, the temperature coefficient of the relative refractive index of the optical glass of the present invention preferably has an upper limit value of +4.0 × 10⁻⁶ °C⁻¹, more preferably +3.5 × 10⁻⁶ °C⁻¹, even more preferably +3.0 × 10⁻⁶ °C⁻¹, even more preferably +2.8 × 10⁻⁶ °C⁻¹, even more preferably +2.5 × 10⁻⁶ °C⁻¹, even more preferably +2.0 × 10⁻⁶ °C⁻¹, even more preferably +1.0 × 10⁻⁶ °C⁻¹, and it is possible to obtain this upper limit or a lower value (on the negative side). On the other hand, the temperature coefficient of the relative refractive index of the optical glass of the present invention preferably has a lower limit value of -10.0 × 10⁻⁶ °C⁻¹, more preferably -5.0 × 10⁻⁶ °C⁻¹, even more preferably -3.0 × 10⁻⁶ °C⁻¹, even more preferably -2.8 × 10⁻⁶ °C⁻¹, even more preferably -2.5 × 10⁻⁶ °C⁻¹, even more preferably -2.0 × 10⁻⁶ °C⁻¹, even more preferably -1.0 × 10⁻⁶ °C⁻¹, and even more preferably 0 × 10⁻⁶ °C⁻¹, and it is possible to obtain this lower limit or a higher value (on the positive side). Among these, as a glass having a refractive index (n_{d}) of 1.75 or more, and further an Abbe number (ν_{d}) of 18 to 45, a glass with a low temperature coefficient of the relative refractive index is almost unknown, and this broadens the options for correcting deviations and the like of an image due to temperature changes, and such corrections can be more easily made. Accordingly, by having such a range of the temperature coefficient of the relative refractive index, it becomes possible to contribute to correction of deviations and the like of an image due to temperature changes. The temperature coefficient of the relative refractive index of the optical glass of the present invention, is a temperature coefficient of the refractive index for light having a wavelength of 589.29 nm in air having the same temperature of the optical glass, and shows the amount of change per 1°C (°C⁻¹) when changing the temperature from 40°C to 60°C.

The optical glass of the present invention has a high water resistance. In particular, the chemical resistance (water resistance) according to the powder method of the glass based on JOGIS06-2009 is preferably class 1 to 3, more preferably class 1 to 2, and most preferably class 1. In this way, when polishing the optical glass, tarnish of the glass due to an aqueous polishing fluid or cleaning fluid can be reduced, whereby it is easy to carry out production of optical elements from the glass. Herein, "water resistance" is resistance to erosion of the glass due to water, and this water resistance can be measured according to the "Measurement Method of Chemical Resistance of Optical Glass" JOGIS06-2009 by the Japan Optical Glass Manufacturers Association. Further, the "chemical resistance (water resistance) is class 1 to 3" means that a chemical resistance (water resistance) carried out according to JOGIS06-2009, by a reduction ratio of the mass of a test piece before and after measurement, is less than 0.25 mass%. Further, "class 1" of the chemical resistance (water resistance) means that the reduction ratio of the mass of a test piece before and after measurement is less than 0.05 mass%, "class 2" means that the reduction ratio of the mass of a test piece before and after measurement is 0.05 to less than 0.10 mass%, "class 3" means that the reduction ratio of the mass of a test piece before and after measurement is 0.10 to less than 0.25 mass%, "class 4" means that the reduction ratio of the mass of a test piece before and after measurement is 0.25 to less than 0.60 mass%, "class 5" means that the reduction ratio of the mass of a test piece before and after measurement is 0.60 to less than 1.10 mass%, and "class 6" means that the reduction ratio of the mass of a test piece before and after measurement is 1.10 mass% or more. Namely, a smaller class number means that the glass has more excellent water resistance.

The optical glass of the present invention preferably has a small specific gravity. More specifically, the optical glass of the present invention preferably has a specific gravity of 5.00 or less. In this way, the mass of optical elements and optical devices using the same can be reduced, whereby it is possible to contribute to weight reduction of optical devices. Accordingly, the specific gravity of the optical glass of the present invention preferably has an upper limit of 5.00, more preferably 4.80, and even more preferably 4.75. Further, the specific gravity of the optical glass of the present invention often is often 3.00 or more, more specifically 3.50 or more, and even more specifically 4.00 or more. The specific gravity of the optical glass of the present invention is measured based on "Measurement Method of Specific Gravity of Optical Glass" JOGIS05-1975 by the Japan Optical Glass Manufacturers Association.

The optical glass of the present invention preferably has a high devitrification resistance, more specifically, has a low liquidus temperature. Namely, the upper limit of the liquidus temperature of the optical glass of the present invention may be preferably 1200°C, more preferably 1180°C, and even more preferably 1150°C. In this way, even if flowing at a low temperature after melting the glass, because the crystallization of the prepared glass is reduced, devitrification when forming the glass from the fused state can be reduced, and the effects on the optical characteristics of optical elements using the glass can be reduced. Further, because the glass can be molded even when the fusion temperature of the glass is low, the consumption of energy when molding the glass can be suppressed, and the production costs of the glass can be reduced. On the other hand, the lower limit of the liquidus temperature of the optical glass of the present invention is not particularly limited, but the liquidus temperature of the glass obtained by the present invention is often roughly 800°C or more, specifically 850°C or more, and even more specifically 900°C or more. Further, in the present specification, "liquidus temperature" indicates the lowest temperature at which crystals are not recognized, when observing the presence/absence of crystals at the glass surface and in the glass directly after a 30 cc caret-shaped glass sample is inserted into a platinum crucible with a volume of 50 ml to reach a fully molten state at 1250°C, lowering the temperature to a predetermined temperature and holding for 1 hour, removing from the furnace and cooling. Herein, the predetermined temperature when lowering the temperature is a temperature between 1200°C and 800°C in increments of 10°C.

### [Preform and Optical Element]

From the produced optical glass, for example, it is possible to manufacture a glass compact, using a polishing technique, or a technique of mold press molding such as reheat press molding or precision press molding or the like. Namely, it is possible to manufacture a glass compact by carrying out a mechanical process such as grinding and polishing or the like on the optical glass, or to manufacture a preform for mold press molding from the optical glass and manufacture a glass compact by carrying out a polishing technique after having carried out reheat press molding on this preform, or to manufacture a glass compact by carrying out precision press molding on a preform manufactured by carrying out an polishing technique or on a preform molded by a publicly known floating molding, or the like. Further, the technique of manufacturing the glass compact is not limited to these techniques.

In this way, the optical glass of the present invention is useful for a great variety of optical elements and optical designs. Among these, in particular, forming a preform from the optical glass of the present invention, carrying out reheat press molding or precision press molding or the like using this preform, and manufacturing an optical element such as a lens or prism or the like is preferable. In this way, it becomes possible to form a preform having a large diameter, whereby it is possible to design large optical elements, while realizing high resolution and high precision imaging characteristics and projection characteristics when used in an optical device.

The glass compact consisting of the optical glass of the present invention can be used, for example, for applications of optical elements such as lenses, prisms, mirrors and the like, and can also be used for devices which readily reach high temperatures, typically optical devices for vehicles, or projectors or copiers or the like.

### EXAMPLES

The compositions of the Examples (No. A1 to No. A60, No. B1 to No. B60) and Comparative Examples (No. a, No. b) of the present invention and the results of the refractive index (n_{d}), Abbe number (ν_{d}), temperature coefficient of the relative refractive index (dn/dT), water resistance, and specific gravity of these glasses are shown in Tables 1 to 17. Herein, the Examples (No. A1 to No. A60) may be taken as examples of the first glass, and Examples (No. B1 to No. B60) may be taken as examples of the second glass. Further, the below examples are provided only for exemplification, and these examples are in no way limiting.

The glasses of the Examples and Comparative Examples of the present invention were all prepared by selecting high purity raw materials usually used for optical glass such as oxides, hydroxides, carbonates, nitrates, fluorides, hydroxides, metaphosphates and the like, respectively corresponding to the raw material of each component, weighed so as to have the proportions of the compositions of each example shown in the table, and after uniformly mixing, were charged into a platinum crucible, and after melting for 1 to 10 hours in a temperature range of 1000 to 1500°C in an electric furnace in accordance with the degree of ease of melting the glass raw materials, and after stirring and homogenizing, were cast in a mold, and annealed.

The refractive index (n_{d}) and Abbe number (ν_{d}) of the glasses of the examples and comparative examples show the measured values with respect to the d-line of a helium lamp (587.56 nm). Further, the Abbe number (ν_{d}) was calculated from the formula Abbe number (ν_{d}) = [(n_{d} - 1)/(n_{F} - n_{C})] using the values of the refractive index of the above mentioned d-line, and the refractive index (n_{F}) with respect to the F-line (486.13 nm), and the refractive index (n_{C}) with respect to the C-line (656.27 nm) of a hydrogen lamp. Then, from the values of the obtained refractive index (n_{d}) and Abbe number (ν_{d}), the intercept b was determined when the slope a in the relational formula n_{d} = -a × ν_{d} + b was 0.0112. Further, the glass used for the present measurements was one obtained where the temperature reduction rate was -25°C/hr and by carrying out a treatment in an annealing furnace.

The temperature coefficient of the relative refractive index (dn/dT) of the glasses of the Examples and Comparative Examples is the measured value of the temperature coefficient of the relative refractive index when the temperature was changed from 40°C to 60°C for a wavelength of 589.29 nm, according to the interferometry method among the methods disclosed in "Measurement Method of Temperature Coefficient of the Relative Refractive Index of Optical Glass" JOGIS18-2008 by the Japan Optical Glass Manufacturers Association.

The water resistance of the glasses of the Examples and Comparative Examples was measured according to the "Measurement Method of Chemical Resistance of Optical Glass" JOGIS06-2009 by the Japan Optical Glass Manufacturers Association. Namely, a glass test specimen crushed to a granularity of 425 to 600 µm in a specific gravity flask was placed inside a platinum cage. The platinum cage was put in a quartz glass round bottom flask into which purified water (pH 6.5 to 7.5) had been added, and was treated for 60 min in boiling water. The reduction rate (mass%) of the glass sample after the treatment was calculated, and it was taken as class 1 when this reduction rate was less than 0.05, class 2 when this reduction rate was from 0.05 to less than 0.10, class 3 when this reduction rate was from 0.10 to less than 0.25, class 4 when this reduction rate was from 0.25 to less than 0.60, class 5 when this reduction rate was from 0.60 to less than 1.10, and class 6 when this reduction rate was 1.10 or more.

The specific gravity of the glasses of the Examples and Comparative Examples was measured based on "Measurement Method of Specific Gravity of Optical Glass" JOGIS05-1975 by the Japan Optical Glass Manufacturers Association.

As the liquidus temperature of the glasses of the Examples and Comparative Examples, the lowest temperature at which there are deemed to be no crystals was measured, when observing the presence/absence of crystals at the glass surface and in the glass directly after a 30 cc caret-shaped glass sample was inserted into a platinum crucible with a volume of 50 ml to reach a fully molten state at 1250°C, lowering the temperature to a predetermined temperature and holding for 1 hour, removing from the furnace and cooling.

**[Table 1]**

| (Units: mass%) | Example | | | | | | | |
|---|---|---|---|---|---|---|---|---|
| | A1 | A2 | A3 | A4 | A5 | A6 | A7 | A8 |
| SiO₂ | 10.07 | 11.07 | 9.07 | 11.07 | 11.07 | 8.12 | 13.12 | 8.96 |
| B₂O₃ | 14.06 | 13.06 | 13.06 | 13.06 | 11.00 | 12.72 | 6.72 | 13.19 |
| BaO | 35.76 | 35.80 | 35.80 | 35.80 | 33.80 | 31.46 | 31.46 | 33.11 |
| La₂O₃ | 27.81 | 24.81 | 26.81 | 22.81 | 24.81 | 20.82 | 10.82 | 20.01 |
| Gd₂O₃ | | | | 5.00 | 1.91 | | 5.00 | 1.97 |
| Y₂O₃ | | 3.00 | 3.00 | | | | 5.00 | 1.97 |
| Yb₂O₃ | | | | | 1.00 | | | |
| ZrO₂ | 3.33 | 3.33 | 3.33 | 3.33 | 3.43 | 7.77 | 5.74 | 5.47 |
| Nb₂O₅ | 2.76 | 1.96 | 1.96 | 1.96 | 1.96 | | | |
| WO₃ | | 0.80 | 0.80 | 0.80 | | | | |
| TiO₂ | 6.16 | 6.16 | 6.16 | 6.17 | 6.56 | 18.11 | 20.11 | 11.95 |
| ZnO | | | | | | | | |
| MgO | | | | | 2.00 | | | |
| CaO | | | | | | 1.00 | 1.00 | 0.49 |
| SrO | | | | | 0.40 | | | |
| Li₂O | | | | | | | 1.00 | |
| Na₂O | | | | | | | | |
| K₂O | | | | | | | | 1.48 |
| Al₂O₃ | | | | | 2.06 | | | |
| Bi₂O₃ | | | | | | | | 1.36 |
| Sb₂O₃ | 0.05 | 0.01 | | | | | 0.03 | 0.02 |
| Total | 100.0 | 100.0 | 100.0 | 100.0 | 100.0 | 100.0 | 100.0 | 100.0 |
| Ti+Zr+W+Nb+Ta | 12.25 | 12.25 | 12.25 | 12.26 | 11.95 | 25.87 | 25.84 | 17.42 |
| Si+B | 24.14 | 24.14 | 22.14 | 24.14 | 22.07 | 20.85 | 19.85 | 22.16 |
| (Si+B)/(La+Gd+Y+Yb) | 0.868 | 0.868 | 0.743 | 0.868 | 0.796 | 1.001 | 0.953 | 0.925 |
| Ba/Si | 3.549 | 3.232 | 3.945 | 3.232 | 3.052 | 3.874 | 2.398 | 3.694 |
| Ti/(Si+B) | 0.255 | 0.255 | 0.278 | 0.256 | 0.297 | 0.869 | 1.013 | 0.540 |
| Gd+Y | 0.00 | 3.00 | 3.00 | 5.00 | 1.91 | 0.00 | 10.00 | 3.94 |
| Y/ (La+Gd+Y+Yb) | 0.000 | 0.108 | 0.101 | 0.000 | 0.000 | 0.000 | 0.240 | 0.082 |
| Ba/ (Si+B+Zn) | 1.481 | 1.483 | 1.617 | 1.483 | 1.531 | 1.509 | 1.585 | 1.494 |
| Mg+Ca+Sr+Ba | 35.76 | 35.80 | 35.80 | 35.80 | 36.20 | 32.46 | 32.46 | 33.61 |
| Li+Na+K | 0.00 | 0.00 | 0.00 | 0.00 | 0.00 | 0.00 | 1.00 | 1.48 |
| La+Gd+Y+Yb | 27.81 | 27.81 | 29.81 | 27.81 | 27.72 | 20.82 | 20.82 | 23.95 |
| Refractive index (nd) | 1.792 | 1.786 | 1.799 | 1.785 | 1.784 | 1.878 | 1. 888 | 1.835 |
| Abbe number (vd) | 39.6 | 39.9 | 39.3 | 39.9 | 39.9 | 31.6 | 30.6 | 35.6 |
| Intercept b (a=0.0112) | 2.235 | 2.233 | 2.240 | 2.232 | 2.231 | 2.233 | 2.232 | 2.234 |
| Temperature coefficient of the relative refractive index [×10⁻⁶°C⁻¹] | 1.0 | 0.5 | 0.1 | 0.3 | 0.7 | 0.4 | 0.8 | 0.3 |

**[Table 2]**

| (Units: mass%) | Example | | | | | | | |
|---|---|---|---|---|---|---|---|---|
| | A9 | A10 | A11 | A12 | A13 | A14 | A15 | A16 |
| SiO₂ | 8.32 | 11.46 | 6.07 | 11.46 | 6.28 | 11.46 | | 11.46 |
| B₂O₃ | 13.47 | 13.51 | 18.06 | 13.51 | 18.68 | 13.51 | 24.97 | 13.51 |
| BaO | 36.90 | 37.03 | 35.80 | 32.89 | 37.03 | 37.03 | 37.03 | 37.03 |
| La₂O₃ | 25.57 | 25.66 | 24.81 | 25.66 | 25.66 | 25.66 | 25.66 | 21.52 |
| Gd₂O₃ | | | | | | | | |
| Y₂O₃ | 3.09 | 3.10 | 3.00 | 3.10 | 3.10 | 3.10 | 3.10 | 3.10 |
| Yb₂O₃ | | | | | | | | |
| ZrO₂ | 3.43 | | 3.33 | | | | | |
| Nb₂O₅ | 2.02 | 2.03 | 1.96 | 2.03 | 2.03 | | | |
| WO₃ | 0.82 | 0.83 | 0.80 | 0.83 | 0.83 | 0.83 | 0.83 | 0.83 |
| TiO₂ | 6.35 | 6.37 | 6.16 | 10.51 | 6. 37 | 8.40 | 8.40 | 12.54 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | | | | | | | |
| Al₂O₃ | | | | | | | | |
| Bi₂O₃ | | | | | | | | |
| Sb₂O₃ | 0.01 | 0.01 | 0.01 | 0.01 | 0.01 | 0.01 | 0.01 | 0.01 |
| Total | 100.0 | 100.0 | 100.0 | 100.0 | 100.0 | 100.0 | 100.0 | 100.0 |
| Ti+Zr+W+Nb+Ta | 12.63 | 9.23 | 12.25 | 13.37 | 9.23 | 9.23 | 9.23 | 13.37 |
| Si+B | 21.79 | 24.97 | 24.14 | 24.97 | 24.97 | 24.97 | 24.97 | 24.97 |
| (Si+B)/(La+Gd+Y+Yb) | 0.760 | 0.868 | 0.868 | 0.868 | 0.868 | 0.868 | 0.868 | 1.014 |
| Ba/Si | 4.434 | 3.232 | 5.894 | 2.871 | 5.894 | 3.232 | - | 3.232 |
| Ti/(Si+B) | 0.292 | 0.255 | 0.255 | 0.421 | 0.255 | 0.336 | 0.336 | 0.502 |
| Gd+Y | 3.09 | 3.10 | 3.00 | 3.10 | 3.10 | 3.10 | 3.10 | 3.10 |
| Y/(La+Gd+Y+Yb) | 0.108 | 0.108 | 0.108 | 0.108 | 0.108 | 0.108 | 0.108 | 0.126 |
| Ba/(Si+B+Zn) | 1.694 | 1.483 | 1.483 | 1.317 | 1.483 | 1.483 | 1.483 | 1.483 |
| Mg+Ca+Sr+Ba | 36.90 | 37.03 | 35.80 | 32.89 | 37.03 | 37.03 | 37.03 | 37.03 |
| Li+Na+K | 0.00 | 0.00 | 0.00 | 0.00 | 0.00 | 0.00 | 0.00 | 0.00 |
| La+Gd+Y+Yb | 28.67 | 28.77 | 27.81 | 28.77 | 28.77 | 28.77 | 28.77 | 24.63 |
| Refractive index (nd) | 1.800 | 1.779 | 1.788 | 1.807 | 1.778 | 1.784 | 1.780 | 1.805 |
| Abbe number (vd) | 39.1 | 40.5 | 40.0 | 36.6 | 40.8 | 39.5 | 39.9 | 35.7 |
| Intercept b (a=0.0112) | 2.238 | 2.233 | 2.236 | 2.217 | 2.234 | 2.225 | 2.226 | 2.205 |
| Temperature coefficient of the relative refractive index [×10⁻⁶°C⁻¹] | 0.5 | 0.3 | 0.4 | 0.2 | 0.6 | 0.0 | -0.3 | 0.6 |

**[Table 3]**

| (Units: mass%) | Example | | | | | | | |
|---|---|---|---|---|---|---|---|---|
| | A17 | A18 | A19 | A20 | A21 | A22 | A23 | A24 |
| SiO₂ | 11.34 | 11.46 | 11.46 | 11.46 | 11.11 | 11.46 | 11.11 | 11.22 |
| B₂O₃ | 13.37 | 11.44 | 13.51 | 11.44 | 13.11 | 8.34 | 13.11 | 13.24 |
| BaO | 36.65 | 39.10 | 41.17 | 37.03 | 35.91 | 37.03 | 35.91 | 36.28 |
| La₂O₃ | 21.30 | 21.52 | 17.39 | 21.52 | 20.88 | 21.52 | 20.88 | 21.09 |
| Gd₂O₃ | | | | | | | | |
| Y₂O₃ | 3.07 | 3.10 | 3.10 | 3.10 | 3.01 | 3.10 | 3.01 | 3.04 |
| Yb₂O₃ | | | | | | | | |
| ZrO₂ | | | | 2.07 | | | | |
| Nb₂O₅ | | | | | | | | |
| WO₃ | 0.82 | 0.83 | 0.83 | 0.83 | 0.80 | 0.83 | 0.80 | 0.81 |
| TiO₂ | 12.41 | 12.54 | 12.54 | 12.54 | 12.16 | 17.71 | 12.16 | 12.28 |
| ZnO | | | | | | | | |
| MgO | | | | | | | | |
| CaO | | | | | | | | |
| SrO | | | | | | | | |
| Li₂O | | | | | | | | 2.03 |
| Na₂O | | | | | | | 3.01 | |
| K₂O | 1.02 | | | | 3.01 | | | |
| Al₂O₃ | | | | | | | | |
| Bi₂O₃ | | | | | | | | |
| Sb₂O₃ | 0.01 | 0.01 | 0.01 | 0.01 | 0.01 | 0.01 | 0.01 | 0.01 |
| Total | 100.0 | 100.0 | 100.0 | 100.0 | 100.0 | 100.0 | 100.0 | 100.0 |
| Ti+Zr+W+Nb+Ta | 13.23 | 13.37 | 13.37 | 15.44 | 12.96 | 18.54 | 12.96 | 13.10 |
| Si+B | 24.71 | 22.90 | 24.97 | 22.90 | 24.22 | 19.79 | 24.22 | 24.46 |
| (Si+B)/(La+Gd+Y+Yb) | 1.014 | 0.930 | 1.219 | 0.930 | 1.014 | 0.804 | 1.014 | 1.014 |
| Ba/Si | 3.232 | 3.413 | 3.594 | 3.232 | 3.232 | 3.232 | 3.232 | 3.232 |
| Ti/(Si+B) | 0.502 | 0.548 | 0.502 | 0.548 | 0.502 | 0.895 | 0.502 | 0.502 |
| Gd+Y | 3.07 | 3.10 | 3.10 | 3.10 | 3.01 | 3.10 | 3.01 | 3.04 |
| Y/(La+Gd+Y+Yb) | 0.126 | 0.126 | 0.151 | 0.126 | 0.126 | 0.126 | 0.126 | 0.126 |
| Ba/ (Si+B+Zn) | 1.483 | 1.707 | 1.649 | 1.617 | 1.483 | 1.871 | 1.483 | 1.483 |
| Mg+Ca+Sr+Ba | 36.65 | 39.10 | 41.17 | 37.03 | 35.91 | 37.03 | 35.91 | 36.28 |
| Li+Na+K | 1.02 | 0.00 | 0.00 | 0.00 | 3.01 | 0.00 | 3.01 | 2.03 |
| La+Gd+Y+Yb | 24.38 | 24.63 | 20.49 | 24.63 | 23.89 | 24.63 | 23.89 | 24.13 |
| Refractive index (nd) | 1.797 | 1.811 | 1.797 | 1.818 | 1.784 | 1.859 | 1.784 | 1.797 |
| Abbe number (vd) | 35.9 | 35.5 | 35.9 | 35.0 | 36.2 | 31.1 | 36.2 | 36.2 |
| Intercept b (a=0.0112) | 2.199 | 2.208 | 2.199 | 2.210 | 2.190 | 2.208 | 2.190 | 2.202 |
| Temperature coefficient of the relative refractive index [×10⁻⁶°C⁻¹] | 0.0 | 0.2 | 0.4 | 0.6 | -0.9 | 0.2 | -0.9 | -0.3 |

**[Table 4]**

| (Units: mass%) | Example | | | | | | | |
|---|---|---|---|---|---|---|---|---|
| | A25 | A26 | A27 | A28 | A29 | A3 0 | A31 | A32 |
| SiO₂ | 11.46 | 11.46 | 8.28 | 11.11 | 9.46 | 11.55 | 10.87 | 9.46 |
| B₂O₃ | 13.51 | 13.51 | 15.40 | 13.11 | 11.53 | 10.49 | 12.82 | 11.53 |
| BaO | 37.03 | 37.03 | 33.35 | 35.92 | 37.32 | 37.32 | 35.12 | 37.32 |
| La₂O₃ | 21.53 | 21.53 | 26.88 | 24.89 | 31.70 | 28.99 | 20.42 | 30.66 |
| Gd₂O₃ | | | | | | | | |
| Y₂O₃ | 3.10 | 3.10 | 4.03 | 3.01 | 3.13 | 3.13 | 2.94 | 3.13 |
| Yb₂O₃ | | | | | | | | |
| ZrO₂ | 4.14 | | 1.42 | | | | | |
| Nb₂O₅ | | 4.14 | | | | | | 2.09 |
| WO₃ | 0.83 | 0.83 | 0.77 | 0.80 | | | | |
| TiO₂ | 8.40 | 8.40 | 9.87 | 8.15 | 6.80 | 8.47 | 11.89 | 5.76 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | | | 3.01 | | | 5.89 | |
| Al₂O₃ | | | | | | | | |
| Bi₂O₃ | | | | | | | | |
| Sb₂O₃ | | | | | 0.05 | 0.05 | 0.05 | 0.05 |
| Total | 100.0 | 100.0 | 100.0 | 100.0 | 100.0 | 100.0 | 100.0 | 100.0 |
| Ti+Zr+W+Nb+Ta | 13.37 | 13.37 | 12.07 | 8.95 | 6.80 | 8.47 | 11.89 | 7.84 |
| Si+B | 24.97 | 24.97 | 23.68 | 24.22 | 20.99 | 22.04 | 23.68 | 20.99 |
| (Si+B)/(La+Gd+Y+Yb) | 1.014 | 1.014 | 0.766 | 0.868 | 0.603 | 0.686 | 1.014 | 0.621 |
| Ba/Si | 3.232 | 3.232 | 4.028 | 3.232 | 3.945 | 3.232 | 3.232 | 3.945 |
| Ti/(Si+B) | 0.336 | 0.336 | 0.417 | 0.336 | 0.324 | 0.384 | 0.502 | 0.274 |
| Gd+Y | 3.10 | 3.10 | 4.03 | 3.01 | 3.13 | 3.13 | 2.94 | 3.13 |
| Y/(La+Gd+Y+Yb) | 0.126 | 0.126 | 0.130 | 0.108 | 0.090 | 0.097 | 0.126 | 0.093 |
| Ba/(Si+B+Zn) | 1.483 | 1.483 | 1.408 | 1.483 | 1.778 | 1.694 | 1.483 | 1.778 |
| Mg+Ca+Sr+Ba | 37.03 | 37.03 | 33.35 | 35.92 | 37.32 | 37.32 | 35.12 | 37.32 |
| Li+Na+K | 0.00 | 0.00 | 0.00 | 3.01 | 0.00 | 0.00 | 5.89 | 0.00 |
| La+Gd+Y+Yb | 24.63 | 24.63 | 30.90 | 27.90 | 34.83 | 32.12 | 23.36 | 33.79 |
| Refractive index (nd) | 1.788 | 1.762 | 1.806 | 1.766 | 1.794 | 1.797 | 1.766 | 1.794 |
| Abbe number (vd) | 38.7 | 39.6 | 37.5 | 39.8 | 40.1 | 38.8 | 36.7 | 40.3 |
| Intercept b (a=0.0112) | 2.222 | 2.206 | 2.226 | 2.212 | 2.244 | 2.232 | 2.177 | 2.245 |
| Temperature coefficient of the relative refractive index [×10⁻⁶°C⁻¹] | 1.0 | 0.8 | 0.4 | -1.1 | 0.4 | -0.3 | -1.7 | 0.8 |

**[Table 5]**

| (Units: mass%) | Example | | | | | | | |
|---|---|---|---|---|---|---|---|---|
| | A33 | A34 | A35 | A36 | A37 | A38 | A39 | A40 |
| SiO₂ | 6.33 | 6.33 | 9.25 | 11.55 | 9.12 | 9.25 | 13.53 | 10.44 |
| B₂O₃ | 14.66 | 14.66 | 13.96 | 10.49 | 13.98 | 13.96 | 9.56 | 12.65 |
| BaO | 37.32 | 37.32 | 33.48 | 37.32 | 31.48 | 33.48 | 34.06 | 34.06 |
| La₂O₃ | 29.62 | 31.70 | 28.97 | 28.99 | 29.88 | 27.96 | 29.98 | 29.98 |
| Gd₂O₃ | | | | | | | | |
| Y₂O₃ | 3.13 | 3.13 | 4.44 | 3.13 | 4.40 | 4.44 | 4.51 | 4.51 |
| Yb₂O₃ | | | | | | | | |
| ZrO₂ | | | 2.41 | | 2.81 | 2.41 | | |
| Nb₂O₅ | 2.09 | | 0.99 | | 1.16 | 0.99 | | |
| WO₃ | | | | | | | | |
| TiO₂ | 6.80 | 6.80 | 6.45 | 8.47 | 7.12 | 7.46 | 7.57 | 7.57 |
| ZnO | | | | | | | | |
| MgO | | | | | | | | 0.73 |
| CaO | | | | | | | | |
| SrO | | | | | | | | |
| Li₂O | | | | | | | 0.73 | |
| Na₂O | | | | | | | | |
| K₂O | | | | | | | | |
| Al₂O₃ | | | | | | | | |
| Bi₂O₃ | | | | | | | | |
| Sb₂O₃ | 0.05 | 0.05 | 0.05 | 0.05 | 0.05 | 0.05 | 0.05 | 0.05 |
| Total | 100.0 | 100.0 | 100.0 | 100.0 | 100.0 | 100.0 | 100.0 | 100.0 |
| Ti+Zr+W+Nb+Ta | 8.88 | 6.80 | 9.85 | 8.47 | 11.09 | 10.87 | 7.57 | 7.57 |
| Si+B | 20.99 | 20.99 | 23.21 | 22.04 | 23.10 | 23.21 | 23.09 | 23.09 |
| (Si+B)/(La+Gd+Y+Yb) | 0.641 | 0.603 | 0.695 | 0.686 | 0.674 | 0.716 | 0.669 | 0.669 |
| Ba/Si | 5.894 | 5.894 | 3.620 | 3.232 | 3.452 | 3.620 | 2.516 | 3.262 |
| Ti/(Si+B) | 0.324 | 0.324 | 0.278 | 0.384 | 0.308 | 0.322 | 0.328 | 0.328 |
| Gd+Y | 3.13 | 3.13 | 4.44 | 3.13 | 4.40 | 4.44 | 4.51 | 4.51 |
| Y/(La+Gd+Y+Yb) | 0.096 | 0.090 | 0.133 | 0.097 | 0.128 | 0.137 | 0.131 | 0.131 |
| Ba/(Si+B+Zn) | 1.778 | 1.778 | 1.443 | 1.694 | 1.362 | 1.443 | 1.475 | 1.475 |
| Mg+Ca+Sr+Ba | 37.32 | 37.32 | 33.48 | 37.32 | 31.48 | 33.48 | 34.06 | 34.79 |
| Li+Na+K | 0.00 | 0.00 | 0.00 | 0.00 | 0.00 | 0.00 | 0.73 | 0.00 |
| La+Gd+Y+Yb | 32.75 | 34.83 | 33.41 | 32.12 | 34.28 | 32.39 | 34.50 | 34.50 |
| Refractive index (nd) | 1.792 | 1.793 | 1.794 | 1.798 | 1.803 | 1.799 | 1.793 | 1.795 |
| Abbe number (vd) | 40.3 | 40.2 | 40.2 | 38.8 | 39.3 | 39.2 | 39.9 | 39.7 |
| Intercept b (a=0.0112) | 2.243 | 2.242 | 2.244 | 2.233 | 2.243 | 2.239 | 2.240 | 2.240 |
| Temperature coefficient of the relative refractive index [×10⁻⁶°C⁻¹] | 0.2 | 0.2 | 0.4 | -0.3 | 0.8 | 0.4 | 0.6 | 0.2 |

**[Table 6]**

| (Units: mass%) | Example | | | | | | | |
|---|---|---|---|---|---|---|---|---|
| | A41 | A42 | A43 | A44 | A45 | A46 | A47 | A48 |
| SiO₂ | 10.44 | 10.07 | 11.55 | 11.25 | 7.95 | 10.07 | 10.07 | 10.07 |
| B₂O₃ | 12.65 | 13.36 | 11.53 | 10.22 | 15.06 | 10.28 | 13.36 | 13.36 |
| BaO | 34.06 | 32.99 | 34.19 | 32.31 | 31.94 | 32.99 | 32.99 | 32.99 |
| La₂O₃ | 24.83 | 30.31 | 28.99 | 32.32 | 29.42 | 30.97 | 27.23 | 16.95 |
| Gd₂O₃ | | | | | 5.15 | 4.97 | | |
| Y₂O₃ | 9.67 | 4.97 | 3.13 | 3.05 | | | 8.05 | 18.33 |
| Yb₂O₃ | | | | | | | | |
| ZrO₂ | 0.73 | 0.97 | | | 1.44 | | 0.97 | 0.97 |
| Nb₂O₅ | | | | | | | | |
| WO₃ | | | | 2.03 | | | | |
| TiO₂ | 7.57 | 7.28 | 7.42 | 8.25 | 7.98 | 7.59 | 7.28 | 7.28 |
| ZnO | | | | | | | | |
| MgO | | | | | | | | |
| CaO | | | 1.04 | | | | | |
| SrO | | | 2.09 | | | | | |
| Li₂O | | | | | | | | |
| Na₂O | | | | | | | | |
| K₂O | | | | 0.51 | | | | |
| Al₂O₃ | | | | | 1.00 | 3.08 | | |
| Bi₂O₃ | | | | | | | | |
| Sb₂O₃ | 0.05 | 0.05 | 0.05 | 0.05 | 0.05 | 0.05 | 0.05 | 0.05 |
| Total | 100.0 | 100.0 | 100.0 | 100.0 | 100.0 | 100.0 | 100.0 | 100.0 |
| Ti+Zr+W+Nb+Ta | 8.30 | 8.24 | 7.42 | 10.28 | 9.42 | 7.59 | 8.24 | 8.24 |
| Si+B | 23.09 | 23.44 | 23.08 | 21.48 | 23.02 | 20.35 | 23.44 | 23.44 |
| (Si+B)/(La+Gd+Y+Yb) | 0.669 | 0.664 | 0.719 | 0.607 | 0.666 | 0.566 | 0.664 | 0.664 |
| Ba/Si | 3.262 | 3.274 | 2.962 | 2.871 | 4.017 | 3.274 | 3.274 | 3.274 |
| Ti/(Si+B) | 0.328 | 0.311 | 0.322 | 0.384 | 0.347 | 0.373 | 0.311 | 0.311 |
| Gd+Y | 9.67 | 4.97 | 3.13 | 3.05 | 5.15 | 4.97 | 8.05 | 18.33 |
| Y/(La+Gd+Y+Yb) | 0.280 | 0.141 | 0.097 | 0.086 | 0.000 | 0.000 | 0.228 | 0.520 |
| Ba/ (Si+B+Zn) | 1.475 | 1.407 | 1.482 | 1. 504 | 1.388 | 1.621 | 1.407 | 1.407 |
| Mg+Ca+Sr+Ba | 34.06 | 32.99 | 37.32 | 32.31 | 31.94 | 32.99 | 32.99 | 32.99 |
| Li+Na+K | 0.00 | 0.00 | 0.00 | 0.51 | 0.00 | 0.00 | 0.00 | 0.00 |
| La+Gd+Y+Yb | 34.50 | 35.28 | 32.12 | 35.37 | 34.57 | 35.94 | 35.28 | 35.28 |
| Refractive index (nd) | 1.792 | 1.793 | 1.787 | 1.806 | 1.796 | 1.793 | 1.792 | 1.789 |
| Abbe number (νd) | 40.0 | 40.2 | 40.1 | 38.7 | 39.6 | 40.0 | 40.2 | 40.5 |
| Intercept b (a=0.0112) | 2.240 | 2.243 | 2.237 | 2.239 | 2.239 | 2.241 | 2.242 | 2.242 |
| Temperature coefficient of the relative refractive index [×10⁻⁶°C⁻¹] | 0.6 | 0.0 | 0.0 | 0.2 | 0.6 | 0.4 | 0.5 | 1.0 |

**[Table 7]**

| (Units: mass%) | Example | | Comparative Example |
|---|---|---|---|
| | A49 | A50 | a |
| SiO₂ | 10.45 | 11.55 | 6.09 |
| B₂O₃ | 17.45 | 10.50 | 21.99 |
| BaO | 35.93 | 33.17 | 2.99 |
| La₂O₃ | 17.90 | 29.01 | 32.04 |
| Gd₂O₃ | | | 2.99 |
| Y₂O₃ | 1.85 | 3.13 | 2.99 |
| Yb₂O₃ | | | |
| ZrO₂ | | | 4. 99 |
| Nb₂O₅ | | | 9.03 |
| WO₃ | | | 3.69 |
| TiO₂ | 7.14 | 8.47 | |
| ZnO | 0.78 | | 12.97 |
| MgO | | | |
| CaO | 3.42 | 4.17 | |
| SrO | 5.00 | | |
| Li₂O | 0.03 | | 0.20 |
| Na₂O | | | |
| K₂O | | | |
| Al₂O₃ | | | |
| Bi₂O₃ | | | |
| Sb₂O₃ | 0.03 | | 0.02 |
| Total | 100.0 | 100.0 | 100.0 |
| Ti+Zr+W+Nb+Ta | 7.14 | 8.47 | 17.71 |
| Si+B | 27.90 | 22.05 | 28.07 |
| (Si+B)/(La+Gd+Y+Yb) | 1.412 | 0.686 | 0.738 |
| Ba/Si | 3.439 | 2.871 | 0.492 |
| Ti/(Si+B) | 0.256 | 0.384 | 0.000 |
| Gd+Y | 1.85 | 3.13 | 5.99 |
| Y/(La+Gd+Y+Yb) | 0.094 | 0.097 | 0.079 |
| Ba/(Si+B+Zn) | 1.253 | 1.504 | 0.073 |
| Mg+Ca+Sr+Ba | 44.35 | 37.34 | 2.99 |
| Li+Na+K | 0.03 | 0.00 | 0.20 |
| La+Gd+Y+Yb | 19.76 | 32.14 | 38.02 |
| Refractive index (nd) | 1.757 | 1.797 | 1.806 |
| Abbe number (vd) | 42.8 | 38.8 | 40.9 |
| Intercept b (a=0.0112) | 2.237 | 2.232 | 2.264 |
| Temperature coefficient of the relative refractive index [×10^{-6°}C⁻¹] | 1.6 | 0.3 | 7.2 |

**[Table 8]**

| (Units: mass%) | Example | | | | | | | |
|---|---|---|---|---|---|---|---|---|
| | A51 | A52 | A53 | A54 | A55 | A56 | A57 | A58 |
| SiO₂ | 11.09 | 6.56 | 8.78 | 7.45 | 6.17 | 7.18 | 8.06 | 7.52 |
| B₂O₃ | 8.16 | 11.09 | 11.91 | 10.98 | 11.39 | 11.30 | 11.42 | 10.13 |
| BaO | 37.30 | 33.52 | 36.83 | 34.15 | 32.18 | 32.22 | 40.61 | 33.52 |
| La₂O₃ | 29.05 | 23.93 | 18.05 | 23.70 | 10.83 | 24.40 | 11.97 | 23.93 |
| Gd₂O₃ | | | | | | | | |
| Y₂O₃ | | 10.78 | 3.94 | 9.73 | | 10.50 | 4.20 | 10.78 |
| Yb₂O₃ | | | | | | | | |
| ZrO₂ | 1.40 | 3.24 | 2.18 | 3.21 | 5.60 | 3.30 | 2.62 | 3.24 |
| Nb₂O₅ | 11.16 | 2.88 | 1.54 | 2.86 | 5.00 | 2.94 | 2.34 | 2.88 |
| WO₃ | | 0.89 | 0.81 | 0.88 | 0.78 | 0.91 | | 0.89 |
| TiO₂ | 1.83 | 7.10 | 15.95 | 7.04 | 28.06 | 7.24 | 18.77 | 7.10 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | | | | | | | |
| Al₂O₃ | | | | | | | | |
| Ta₂O₅ | | | | | | | | |
| Bi₂O₃ | | | | | | | | |
| Sb₂O₃ | | 0.01 | | 0.01 | | 0.01 | 0.02 | 0.01 |
| Total | 100.0 | 100.0 | 100.0 | 100.0 | 100.0 | 100.0 | 100.0 | 100.0 |
| Ti+Zr+W+Nb+Ta | 14.39 | 14.12 | 20.49 | 13.98 | 39.44 | 14.40 | 23.72 | 14.12 |
| Si+B | 19.26 | 17.64 | 20.69 | 18.43 | 17.56 | 18.48 | 19.47 | 17.64 |
| (Si+B)/(La+Gd+Y+Yb) | 0.663 | 0.508 | 0.941 | 0.551 | 1.622 | 0.530 | 1.204 | 0.508 |
| Ba/Si | 3.362 | 5.111 | 4.196 | 4.586 | 5.213 | 4.489 | 5.042 | 4.458 |
| Ti/ (Si+B) | 0.095 | 0.403 | 0.771 | 0.382 | 1.598 | 0.392 | 0.964 | 0.403 |
| Gd+Y | 0.00 | 10.78 | 3.94 | 9.73 | 0.00 | 10.50 | 4.20 | 10.78 |
| Y/(La+Gd+Y+Yb) | 0.000 | 0.311 | 0. 179 | 0.291 | 0.000 | 0.301 | 0.260 | 0.311 |
| Ba/(Si+B+Zn) | 1.937 | 1.900 | 1.780 | 1.853 | 1.833 | 1.743 | 2.085 | 1.900 |
| Mg+Ca+Sr+Ba | 37.30 | 33.52 | 36.83 | 34.15 | 32.18 | 32.22 | 40.61 | 33.52 |
| Li+Na+K | 0.00 | 0.00 | 0.00 | 0.00 | 0.00 | 0.00 | 0.00 | 0.00 |
| La+Gd+Y+Yb | 29.05 | 34.71 | 21.99 | 33.43 | 10.83 | 34.90 | 16.18 | 34.71 |
| Refractive index (nd) | 1.816 | 1.834 | 1.856 | 1.828 | 1.967 | 1.832 | 1.873 | 1.833 |
| Abbe number (vd) | 38.9 | 37.1 | 31.4 | 37.3 | 23.3 | 37.1 | 29.4 | 37.1 |
| Intercept b (a=0.0112) | 2.252 | 2.249 | 2.207 | 2.246 | 2.229 | 2.248 | 2.202 | 2.249 |
| Temperature coefficient of the relative refractive index [×10⁻⁶°C⁻¹] | 0.2 | 0.4 | 0.8 | 0.3 | 0.5 | 0.3 | 0.0 | 0.1 |

**[Table 9]**

| (Units: mass%) | Example | |
|---|---|---|
| | A59 | A60 |
| SiO₂ | 8.06 | 7.32 |
| B₂O₃ | 11.42 | 10.38 |
| BaO | 32.61 | 39.00 |
| La₂O₃ | 11.97 | 10.88 |
| Gd₂O₃ | 4.20 | 3.82 |
| Y₂O₃ | | |
| Yb₂O₃ | | |
| ZrO₂ | 2.14 | |
| Nb₂O₅ | 2.34 | 2.13 |
| WO₃ | | 2.38 |
| TiO₂ | 18.77 | 17.06 |
| ZnO | | |
| MgO | 3.00 | |
| CaO | 5.00 | |
| SrO | | 7.00 |
| Li₂O | | |
| Na₂O | | |
| K₂O | | |
| Al₂O₃ | | |
| Ta₂O₅ | 0.50 | |
| Bi₂O₃ | | |
| Sb₂O₃ | | 0.02 |
| Total | 100.0 | 100.0 |
| Ti+Zr+W+Nb+Ta | 23.74 | 21.57 |
| Si+B | 19.47 | 17.70 |
| (Si+B)/(La+Gd+Y+Yb) | 1.204 | 1.204 |
| Ba/Si | 4.048 | 5.326 |
| Ti/(Si+B) | 0.964 | 0.964 |
| Gd+Y | 4.20 | 3.82 |
| Y/(La+Gd+Y+Yb) | 0.000 | 0.000 |
| Ba/(Si+B+Zn) | 1.675 | 2.203 |
| Mg+Ca+Sr+Ba | 40.61 | 46.00 |
| Li+Na+K | 0.00 | 0.00 |
| La+Gd+Y+Yb | 16.18 | 14.71 |
| Refractive index (nd) | 1.871 | 1.858 |
| Abbe number (νd) | 29.5 | 30.6 |
| Intercept b (a=0.0112) | 2.201 | 2.201 |
| Temperature coefficient of the relative refractive index [×10⁻⁶°C⁻¹] | 0.7 | -0.7 |

**[Table 10]**

| (Units: mass%) | Example | | | | | | | |
|---|---|---|---|---|---|---|---|---|
| | B1 | B2 | B3 | B4 | B5 | B6 | B7 | B8 |
| SiO₂ | 8.44 | 7.78 | 13.70 | 10.71 | 8.44 | 11.24 | | 8.20 |
| B₂O₃ | 10.26 | 8.19 | 3.63 | 9.12 | 10.25 | 9.58 | 24.97 | 16.01 |
| BaO | 24.23 | 18.80 | 23.62 | 19.29 | 24.23 | 20.24 | 37.03 | 23.67 |
| La₂O₃ | 23.60 | 31.60 | 23.47 | 33.37 | 20.09 | 35.02 | 25.66 | 32.26 |
| Gd₂O₃ | | | | | | | | |
| Y₂O₃ | 1.50 | 1.50 | 1.50 | 3.00 | 5.00 | 3.15 | 3.10 | 6.98 |
| ZrO₂ | 6.13 | 6.50 | 7.69 | 6.66 | 6.13 | 6.99 | | 3.01 |
| Nb₂O₅ | 5.66 | 6.84 | 7.56 | 4.72 | 4.86 | | | |
| WO₃ | | | | 0.80 | 0.80 | 0.84 | 0.81 | |
| TiO₂ | 20.19 | 18.75 | 17.82 | 12.32 | 20.19 | 12.93 | 8.42 | 9.81 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | | 0.98 | | | | | |
| Al₂O₃ | | | | | | | | |
| Sb₂O₃ | | 0.06 | 0.06 | 0.01 | 0.01 | 0.01 | 0.01 | 0.05 |
| Total | 100.0 | 100.0 | 100.0 | 100.0 | 100.0 | 100.0 | 100.0 | 100.0 |
| La+Gd+Y+Yb | 25.10 | 33.10 | 24.97 | 36.37 | 25.09 | 38.17 | 28.77 | 39.24 |
| Ti+Zr+W+Nb+Ta | 31.98 | 32.09 | 33.06 | 24.50 | 31.98 | 20.76 | 9.23 | 12.82 |
| Si+B | 18.70 | 15.97 | 17.32 | 19.84 | 18.69 | 20.82 | 24.97 | 24.21 |
| (Si+B)/(La+Gd+Y+Yb) | 0.745 | 0.482 | 0.694 | 0.545 | 0.745 | 0.545 | 0.868 | 0.617 |
| Ba/Si | 2.870 | 2.416 | 1.725 | 1.800 | 2.870 | 1.800 | - | 2.885 |
| Ti/(Si+B) | 1.080 | 1.174 | 1.029 | 0.621 | 1.080 | 0.621 | 0.337 | 0.405 |
| Gd+Y | 1.50 | 1.50 | 1. 50 | 3.00 | 5.00 | 3.15 | 3.10 | 6.98 |
| Y/ (La+Gd+Y+Yb) | 0.060 | 0.045 | 0.060 | 0.082 | 0.199 | 0.082 | 0.108 | 0.178 |
| Ba/(Si+B+Zn) | 1.296 | 1.178 | 1.364 | 0.972 | 1.296 | 0.972 | 1.483 | 0.978 |
| Mg+Ca+Sr+Ba | 24.23 | 18.80 | 23.62 | 19.29 | 24.23 | 20.24 | 37.03 | 23.67 |
| Li+Na+K | 0.00 | 0.00 | 0.98 | 0.00 | 0.00 | 0.00 | 0.00 | 0.00 |
| Refractive index (nd) | 1.924 | 1.962 | 1.933 | 1.890 | 1.930 | 1.873 | 1.780 | 1.822 |
| Abbe number (vd) | 28.0 | 27.7 | 28.2 | 31.7 | 27.1 | 33.3 | 39.5 | 37.4 |
| Intercept b (a=0.0112) | 2.238 | 2.273 | 2.249 | 2.245 | 2.234 | 2.246 | 2.223 | 2.241 |
| Temperature coefficient of the relative refractive index [×10⁻⁶°C⁻¹] | 2.5 | 2.3 | 2.8 | 1.9 | 2.5 | 1.5 | 0.1 | 1.1 |
| Specific gravity | 4.49 | 4.71 | 4.52 | 4.65 | 4.44 | 4.64 | 4.60 | |
| Powder method water resistance [class] | 1 | 1 | 1 | 1 | 1 | 1 | 2 | |
| Liquidus temperature [°C] | | | | 1098 | 1094 | 1160 | | 1170 |

**[Table 11]**

| (Units: mass%) | Example | | | | | | | |
|---|---|---|---|---|---|---|---|---|
| | B9 | B10 | B11 | B12 | B13 | B14 | B15 | B16 |
| SiO₂ | 9.58 | 7.32 | 8.93 | 6.89 | 5.40 | 9.02 | 8.75 | 8.81 |
| B₂O₃ | 15.77 | 17.73 | 14.72 | 13.35 | 15.37 | 14.87 | 14.43 | 14.98 |
| BaO | 25.54 | 20.54 | 27.31 | 23.28 | 21.84 | 27.59 | 26.76 | 26.79 |
| La₂O₃ | 32.64 | 33.64 | 27.85 | 20.65 | 29.11 | 24.05 | 23.33 | 25.51 |
| Gd₂O₃ | | | 10.09 | | | | 6.94 | |
| Y₂O₃ | 5.96 | 9.05 | 1.01 | 3.10 | 9.70 | 14.28 | 9.91 | 12.86 |
| ZrO₂ | 2.12 | 4.19 | 2.38 | 4.36 | 3.00 | 2.41 | | 2.53 |
| Nb₂O₅ | | | | 3.02 | | | 2.33 | |
| WO₃ | | | | 0.47 | | | | 0.81 |
| TiO₂ | 8.33 | 7.49 | 7.65 | 20.03 | 7.53 | 7.73 | 7.50 | 7.65 |
| ZnO | | | | | | | | |
| MgO | | | | | | | | |
| CaO | | | | 3.62 | | | | |
| SrO | | | | 1.21 | 5.00 | | | |
| Li₂O | | | | | | | | |
| Na₂O | | | | | | | | |
| K₂O | | | | | | | | |
| Al₂O₃ | | | | | 3.00 | | | |
| Sb₂O₃ | 0.05 | 0.05 | 0.05 | 0.02 | 0.05 | 0.05 | 0.05 | 0.05 |
| Total | 100.0 | 100.0 | 100.0 | 100.0 | 100.0 | 100.0 | 100.0 | 100.0 |
| La+Gd+Y+Yb | 38.59 | 42.69 | 38.95 | 23.75 | 38.81 | 38.33 | 40.18 | 38.37 |
| Ti+Zr+W+Nb+Ta | 10.46 | 11.68 | 10.03 | 27.88 | 10.53 | 10.13 | 9.83 | 10.99 |
| Si+B | 25.36 | 25.04 | 23.66 | 20.24 | 20.77 | 23.90 | 23.18 | 23.80 |
| (Si+B)/(La+Gd+Y+Yb) | 0.657 | 0.587 | 0.607 | 0.852 | 0.535 | 0.623 | 0.577 | 0.620 |
| Ba/Si | 2.665 | 2.806 | 3.057 | 3.377 | 4.042 | 3.057 | 3.057 | 3.040 |
| Ti/ (Si+B) | 0.329 | 0.299 | 0.323 | 0.989 | 0.362 | 0.323 | 0.323 | 0.321 |
| Gd+Y | 5.96 | 9.05 | 11.10 | 3.10 | 9.70 | 14.28 | 16.85 | 12.86 |
| Y/(La+Gd+Y+Yb) | 0.154 | 0.212 | 0.026 | 0.131 | 0.250 | 0.373 | 0.247 | 0.335 |
| Ba / (Si+B+Zn) | 1.007 | 0.820 | 1.154 | 1.150 | 1.051 | 1.154 | 1.154 | 1.126 |
| Mg+Ca+Sr+Ba | 25.54 | 20.54 | 27.31 | 28.11 | 26.84 | 27.59 | 26.76 | 26.79 |
| Li+Na+K | 0.00 | 0.00 | 0.00 | 0.00 | 0.00 | 0.00 | 0.00 | 0.00 |
| Refractive index (nd) | 1.803 | 1.813 | 1.804 | 1.898 | 1. 806 | 1.802 | 1.798 | 1.804 |
| Abbe number (vd) | 39.2 | 39.6 | 39.5 | 30.3 | 39.6 | 39.7 | 39.9 | 39.5 |
| Intercept b (a=0.0112) | 2.242 | 2.256 | 2.246 | 2.237 | 2.249 | 2.246 | 2.244 | 2.246 |
| Temperature coefficient of the relative refractive index [×10⁻⁶°C⁻¹] | 0.4 | 1.9 | 1.1 | 1.6 | 2.1 | 1.5 | 1.7 | 1.5 |
| Specific gravity | | | | | | | | |
| Powder method water resistance [class] | | | | | | | | |
| Liquidus temperature [°C] | 1156 | 1140 | 1130 | 1153 | 1145 | 1145 | 1117 | 1112 |

**[Table 12]**

| (Units: mass%) | Example | | | | | | | Comparative Example |
|---|---|---|---|---|---|---|---|---|
| | B17 | B18 | B19 | B20 | B21 | B22 | B23 | |
| SiO₂ | 8.83 | 8.86 | 8.81 | 8.81 | 8.83 | 8.81 | 5.82 | 6.09 |
| B₂O₃ | 14.05 | 14.10 | 14.99 | 14.99 | 14.55 | 14.98 | 19.90 | 21.99 |
| BaO | 24.00 | 27.09 | 26.80 | 22.24 | 27.34 | 26.79 | 12.95 | 2.99 |
| La₂O₃ | 24.03 | 24.12 | 23.50 | 25.52 | 23.53 | 20.45 | 35.62 | 32.04 |
| Gd₂O₃ | | | 13.88 | | | | | 2.99 |
| Y₂O₃ | 13.98 | 14.03 | 1.01 | 11.34 | 13.98 | 17.92 | 11.38 | 2.99 |
| ZrO₂ | 2.36 | 2.36 | 2.53 | 2.53 | 2.36 | 2.53 | 6.20 | 4.99 |
| Nb₂O₅ | 2.15 | | 0.30 | | | | | 9.03 |
| WO₃ | | 0.80 | 0.51 | 0.81 | | 0.81 | | 3.69 |
| TiO₂ | 7.56 | 7.59 | 7.65 | 7.65 | 7.56 | 7.65 | 8.08 | |
| ZnO | | | | 1.01 | | | | 12.97 |
| MgO | | | | 1.01 | | | | |
| CaO | | | | 2.03 | | | | |
| SrO | | | | 2.03 | | | | |
| Li₂O | | | | | 1.80 | | | 0.20 |
| Na₂O | 3.00 | | | | | | | |
| K₂O | | 1.00 | | | | | | |
| Al₂O₃ | | | | | | | | |
| Sb₂O₃ | 0.05 | 0.05 | 0.02 | 0.02 | 0.05 | 0.05 | 0.05 | 0.02 |
| Total | 100.0 | 100.0 | 100.0 | 100.0 | 1100.0 | 1100.0 | 100.0 | 100.0 |
| La+Gd+Y+Yb | 38.01 | 38.14 | 38.38 | 36.87 | 37.51 | 38.37 | 47.00 | 38.02 |
| Ti+Zr+W+Nb+Ta | 12.06 | 10.76 | 10.99 | 10.99 | 9.92 | 10.99 | 14.28 | 17.71 |
| Si+B | 22.88 | 22.96 | 23.80 | 23.80 | 23.38 | 23.80 | 25.72 | 28.07 |
| (Si+B)/(La+Gd+Y+Yb) | 0.602 | 0.602 | 0.620 | 0.646 | 0.623 | 0.620 | 0.547 | 0.738 |
| Ba/Si | 2.718 | 3.057 | 3.040 | 2.523 | 3.096 | 3.040 | 2.225 | 0.492 |
| Ti/(Si+B) | 0.331 | 0.331 | 0.321 | 0.321 | 0.323 | 0.321 | 0.314 | 0.000 |
| Gd+Y | 13.98 | 14.03 | 14.89 | 11.34 | 13.98 | 17.92 | 11.38 | 5.99 |
| Y/(La+Gd+Y+Yb) | 0.368 | 0.368 | 0.026 | 0.308 | 0.373 | 0.467 | 0.242 | 0.079 |
| Ba/(Si+B+Zn) | 1.049 | 1.180 | 1.126 | 0.896 | 1.169 | 1.126 | 0.503 | 0.073 |
| Mg+Ca+Sr+Ba | 24.00 | 27.09 | 26.80 | 27.31 | 27.34 | 26.79 | 12.95 | 2.99 |
| Li+Na+K | 3.00 | 1.00 | 0.00 | 0.00 | 1.80 | 0.00 | 0.00 | 0.20 |
| Refractive index (nd) | 1.785 | 1.799 | 1.804 | 1.802 | 1.794 | 1.804 | 1.823 | 1.806 |
| Abbe number (vd) | 39.8 | 39.3 | 39.4 | 39.4 | 40.2 | 39.5 | 38.7 | 40.9 |
| Intercept b (a=0.0112) | 2.230 | 2.239 | 2.246 | 2.243 | 2.243 | 2.246 | 2.257 | 2.264 |
| Temperature coefficient of the relative refractive index [×10⁻⁶°C⁻¹] | -0.1 | 0.5 | 1.2 | 2.3 | 0.9 | 1.8 | 3.0 | 7.2 |
| Specific gravity | | | | | | | | 4.45 |
| Powder method water resistance [class] | | | | | | | | 1 |
| Liquidus temperature [°C] | 1074 | 1084 | 1100 | 1140 | 1095 | 1090 | 1117 | |

**[Table 13]**

| (Units: mass%) | Example | | | | | | | |
|---|---|---|---|---|---|---|---|---|
| | B24 | B25 | B26 | B27 | B28 | B29 | B30 | B31 |
| SiO₂ | 7. 89 | 7.89 | 7.82 | 7.68 | 8.00 | 7.82 | 7.82 | 8.00 |
| B₂O₃ | 14.00 | 14.00 | 12.48 | 12.71 | 14.11 | 12.48 | 12.48 | 16.11 |
| BaO | 26.61 | 26.61 | 26.36 | 25.88 | 24.24 | 26.36 | 30.86 | 24.24 |
| La₂O₃ | 25.43 | 25.43 | 28.44 | 27.01 | 31.35 | 28.44 | 23.94 | 28.35 |
| Gd₂O₃ | | | | | | | | |
| Y₂O₃ | 12.33 | 12.33 | 12.21 | 11.99 | 7.98 | 11.21 | 12.21 | 7.98 |
| ZrO₂ | 2.90 | 2.90 | 2.87 | 2.82 | 5.14 | 4.26 | 2.87 | 5.14 |
| Nb₂O₅ | 7.07 | | | | 6.22 | | | 6.22 |
| WO₃ | | | 0.93 | 0.91 | 1.01 | 0.93 | 0.93 | 1.01 |
| TiO₂ | 3.78 | 10.84 | 8.89 | 9.18 | 1.94 | 8.50 | 8.89 | 2.94 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | | | 1.82 | | | | |
| Al₂O₃ | | | | | | | | |
| Sb₂O₃ | | | 0.01 | 0.01 | 0.01 | 0.01 | 0.01 | 0.01 |
| Total | 100.0 | 100.0 | 100.0 | 100.0 | 100.0 | 100.0 | 100.0 | 100.0 |
| La+Gd+Y+Yb | 37.76 | 37.76 | 40.65 | 39.00 | 39.33 | 39.65 | 36.15 | 36.33 |
| Ti+Zr+W+Nb+Ta | 13.74 | 13.74 | 12.68 | 12.91 | 14.31 | 13.68 | 12.68 | 15.31 |
| Si+B | 21. 89 | 21.89 | 20.30 | 20.39 | 22.12 | 20.30 | 20.30 | 24.12 |
| (Si+B)/(La+Gd+Y+Yb) | 0.580 | 0.580 | 0.499 | 0.523 | 0.562 | 0.512 | 0.562 | 0.664 |
| Ba/Si | 3.371 | 3.371 | 3.371 | 3.371 | 3.029 | 3.371 | 3.946 | 3.029 |
| Ti/(Si+B) | 0.172 | 0.495 | 0.438 | 0.450 | 0.088 | 0.419 | 0.438 | 0.122 |
| Gd+Y | 12.33 | 12.33 | 12.21 | 11.99 | 7.98 | 11.21 | 12.21 | 7.98 |
| Y/(La+Gd+Y+Yb) | 0.326 | 0.326 | 0.300 | 0.307 | 0.203 | 0.283 | 0.338 | 0.220 |
| Ba / (Si+B+Zn) | 1.215 | 1.215 | 1.299 | 1.270 | 1.096 | 1.299 | 1.520 | 1.005 |
| Mg+Ca+Sr+Ba | 26.61 | 26.61 | 26.36 | 25.88 | 24.24 | 26.36 | 30.86 | 24.24 |
| Li+Na+K | 0.00 | 0.00 | 0.00 | 1.82 | 0.00 | 0.00 | 0.00 | 0.00 |
| Refractive index (nd) | 1.816 | 1.833 | 1.834 | 1.820 | 1.812 | 1.834 | 1.824 | 1.806 |
| Abbe number (vd) | 39.6 | 36.3 | 37.3 | 37.1 | 41.0 | 37.4 | 37.4 | 40.5 |
| Intercept b (a=0.0112) | 2.259 | 2.239 | 2.251 | 2.236 | 2.272 | 2.252 | 2.243 | 2.260 |
| Temperature coefficient of the relative refractive index [×10⁻⁶°C⁻¹] | 1.4 | 1.4 | 1.0 | 0.7 | 1.3 | 1.2 | 0.8 | 1.8 |
| Specific gravity | 4.64 | 4.55 | 4.71 | 4.61 | 4.75 | 4.72 | | 4.59 |
| Powder method water resistance [class] | 1 | 1 | 1 | 1 | 1 | 1 | 1 | 1 |
| Liquidus temperature [°C] | | | | | | | | |

**[Table 14]**

| (Units: mass%) | Example | | | | | | | |
|---|---|---|---|---|---|---|---|---|
| | B32 | B33 | B34 | B35 | B36 | B37 | B38 | B39 |
| SiO₂ | 7.86 | 7.96 | 7.82 | 7.82 | 7.82 | 7.89 | 7.82 | 6.56 |
| B₂O₃ | 12.54 | 14.04 | 11.53 | 11.28 | 11.18 | 12.69 | 11.53 | 11.09 |
| BaO | 26.48 | 24.12 | 30.86 | 30.86 | 30.86 | 26.61 | 30.86 | 33.52 |
| La₂O₃ | 27.83 | 31.19 | 24.89 | 25.14 | 25.74 | 27.89 | 24.89 | 23.93 |
| Gd₂O₃ | | | | | | | | |
| Y₂O₃ | 11.27 | 7.94 | 10.21 | 10.21 | 10.21 | 11.33 | 9.71 | 10.78 |
| ZrO₂ | 3.58 | 5.11 | 3.37 | 2.87 | 2.87 | 2.90 | 4.87 | 3.24 |
| Nb₂O₅ | 0.50 | 6.19 | 3.00 | 4.00 | 3.00 | 1.25 | 3.00 | 2.88 |
| WO₃ | 1.46 | 1.01 | 0.93 | 0.93 | 0.93 | 1.00 | 0.93 | 0.89 |
| TiO₂ | 8.47 | 1.93 | 7.39 | 6.89 | 7.39 | 8.44 | 6.39 | 7.10 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | 0.50 | | | | | | |
| Al₂O₃ | | | | | | | | |
| Sb₂O₃ | 0.01 | 0.01 | 0.01 | 0.01 | 0.01 | 0.01 | 0.01 | 0.01 |
| Total | 100.0 | 100.0 | 100.0 | 100.0 | 100.0 | 100.0 | 100.0 | 100.0 |
| La+Gd+Y+Yb | 39.10 | 39.13 | 35.10 | 35.35 | 35.95 | 39.22 | 34.60 | 34.71 |
| Ti+Zr+W+Nb+Ta | 14.01 | 14.24 | 14.68 | 14.68 | 14.18 | 13.59 | 15.18 | 14.12 |
| Si+B | 20.40 | 22.01 | 19.35 | 19.10 | 19.00 | 20.58 | 19.35 | 17.64 |
| (Si+B)/(La+Gd+Y+Yb) | 0.522 | 0.562 | 0.551 | 0.540 | 0.529 | 0.525 | 0.559 | 0.508 |
| Ba/Si | 3.369 | 3.029 | 3.946 | 3.946 | 3.946 | 3.371 | 3.946 | 5.111 |
| Ti/(Si+B) | 0.415 | 0.088 | 0.382 | 0.361 | 0.389 | 0.410 | 0.330 | 0.403 |
| Gd+Y | 11.27 | 7.94 | 10.21 | 10.21 | 10.21 | 11.33 | 9.71 | 10.78 |
| Y/ (La+Gd+Y+Yb) | 0.288 | 0.203 | 0.291 | 0.289 | 0.284 | 0.289 | 0.281 | 0.311 |
| Ba/(Si+B+Zn) | 1.298 | 1.096 | 1.595 | 1.616 | 1.624 | 1.293 | 1.595 | 1.900 |
| Mg+Ca+Sr+Ba | 26.48 | 24.12 | 30.86 | 30.86 | 30.86 | 26.61 | 30.86 | 33.52 |
| Li+Na+K | 0.00 | 0.50 | 0.00 | 0.00 | 0.00 | 0.00 | 0.00 | 0.00 |
| Refractive index (nd) | 1.834 | 1.810 | 1.831 | 1. 833 | 1.833 | 1.833 | 1.829 | 1.834 |
| Abbe number (vd) | 37.2 | 41.0 | 37.1 | 37.1 | 37.1 | 37.2 | 37.7 | 37.1 |
| Intercept b(a=0.0112) | 2.250 | 2.269 | 2.247 | 2.248 | 2.249 | 2.249 | 2.251 | 2.249 |
| Temperature coefficient of the relative refractive index [×10⁻⁶°C⁻¹] | 1.0 | 1.4 | 0.6 | 0.7 | 0.7 | 1.0 | 0.7 | 0.4 |
| Specific gravity | 4.71 | 4.71 | 4.78 | 4.80 | 4.81 | 4.70 | | |
| Powder method water resistance [class] | 1 | 1 | 1 | 1 | 1 | 1 | 1 | 1 |
| Liquidus temperature [°C] | | | | | | | | |

**[Table 15]**

| (Units: mass%) | Example | | | | | | | |
|---|---|---|---|---|---|---|---|---|
| | B40 | B41 | B42 | B43 | B44 | B45 | B46 | B47 |
| SiO₂ | 7.45 | 7.89 | 7.03 | 7.89 | 6.02 | 7.82 | 7.82 | 7.82 |
| B₂O₃ | 10.98 | 15.40 | 16.36 | 12.13 | 15.40 | 11.48 | 11.48 | 11.48 |
| BaO | 34.15 | 26.61 | 25.05 | 26.61 | 26.61 | 30.86 | 30.86 | 30.86 |
| La₂O₃ | 23.70 | 22.63 | 30.03 | 27.30 | 24.50 | 23.94 | 23.94 | 24.94 |
| Gd₂O₃ | | | | | | | | |
| Y₂O₃ | 9.73 | 12.33 | 8.96 | 12.33 | 12.33 | 12.21 | 12.21 | 12.21 |
| ZrO₂ | 3.21 | 2.90 | 2.92 | 2.90 | 2.90 | 2.87 | 2.87 | 2.87 |
| Nb₂O₅ | 2.86 | | | | | | 4.00 | 2.00 |
| WO₃ | 0.88 | | | | | 0.93 | 0.93 | 0.93 |
| TiO₂ | 7.04 | 12.24 | 9.64 | 10.84 | 12.24 | 9.89 | 5.89 | 6.89 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | | | | | | | |
| Al₂O₃ | | | | | | | | |
| Sb₂O₃ | 0.01 | | 0.01 | 0.01 | 0.01 | 0.01 | 0.01 | 0.01 |
| Total | 100.0 | 100.0 | 100.0 | 100.0 | 100.0 | 100.0 | 100.0 | 100.0 |
| La+Gd+Y+Yb | 33.43 | 34.96 | 38.99 | 39.62 | 36.82 | 36.15 | 36.15 | 37.15 |
| Ti+Zr+W+Nb+Ta | 13.98 | 15.14 | 12.57 | 13.74 | 15.14 | 13.68 | 13.68 | 12.68 |
| Si+B | 18.43 | 23.30 | 23.39 | 20.02 | 21.42 | 19.30 | 19.30 | 19.30 |
| (Si+B)/(La+Gd+Y+Yb) | 0.551 | 0.666 | 0.600 | 0.505 | 0.582 | 0.534 | 0.534 | 0.520 |
| Ba/Si | 4.586 | 3.371 | 3.565 | 3.371 | 4.417 | 3.946 | 3.946 | 3.946 |
| Ti/(Si+B) | 0.382 | 0.526 | 0.412 | 0.541 | 0.571 | 0.512 | 0.305 | 0.357 |
| Gd+Y | 9.73 | 12.33 | 8.96 | 12.33 | 12.33 | 12.21 | 12.21 | 12.21 |
| Y/ (La+Gd+Y+Yb) | 0.291 | 0.353 | 0.230 | 0.311 | 0.335 | 0.338 | 0.338 | 0.329 |
| Ba/ (Si+B+Zn) | 1.853 | 1.142 | 1.071 | 1.329 | 1.242 | 1.599 | 1.599 | 1.599 |
| Mg+Ca+Sr+Ba | 34.15 | 26.61 | 25.05 | 26.61 | 26.61 | 30.86 | 30.86 | 30.86 |
| Li+Na+K | 0.00 | 0.00 | 0.00 | 0.00 | 0.00 | 0.00 | 0.00 | 0.00 |
| Refractive index (nd) | 1.828 | 1.833 | 1.824 | 1.845 | 1.844 | 1.835 | 1.825 | 1.825 |
| Abbe number (vd) | 37.3 | 35.3 | 37.4 | 35.8 | 34.9 | 36.3 | 38.1 | 38.0 |
| Intercept b (a=0.0112) | 2.246 | 2.228 | 2.242 | 2.245 | 2.235 | 2.242 | 2.251 | 2.251 |
| Temperature coefficient of the relative refractive index [×10⁻⁶°C⁻¹] | 0.3 | 1.5 | 1.8 | 1.2 | 1.0 | 1.2 | 0.4 | 0.3 |
| Specific gravity | | 4.42 | 4.55 | 4.66 | 4.54 | | | |
| Powder method water resistance [class] | 1 | 1 | 1 | 1 | 1 | 1 | 1 | 1 |
| Liquidus temperature [°C] | | | | | | | | |

**[Table 16]**

| (Units: mass%) | Example | | | | | | | |
|---|---|---|---|---|---|---|---|---|
| | B48 | B49 | B50 | B51 | B52 | B53 | B54 | B55 |
| SiO₂ | 7.82 | 8.00 | 6.82 | 7.18 | 7.52 | 7.89 | 7.82 | 7.82 |
| B₂O₃ | 9.98 | 15.61 | 11.53 | 11.30 | 10.13 | 13.06 | 12.94 | 12.48 |
| BaO | 30.86 | 24.24 | 30.86 | 32.22 | 33.52 | 26.61 | 26.36 | 26.36 |
| La₂O₃ | 25.43 | 29.35 | 25.89 | 24.40 | 23.93 | 26.36 | 27.51 | 27.44 |
| Gd₂O₃ | | | | | | | | |
| Y₂O₃ | 12.21 | 7.98 | 10.21 | 10.50 | 10.78 | 14.19 | 12.21 | 11.21 |
| ZrO₂ | 2.87 | 5.14 | 5.37 | 3.30 | 3.24 | 2.90 | 2.87 | 4.26 |
| Nb₂O₅ | 5.00 | 6.22 | 3.00 | 2.94 | 2.88 | | | |
| WO₃ | 0.93 | 1.01 | 0.93 | 0.91 | 0.89 | | 0.93 | 1.93 |
| TiO₂ | 4.89 | 2.44 | 5.39 | 7.24 | 7.10 | 8.97 | 9.35 | 8.50 |
| ZnO | | | | | | | | |
| MgO | | | | | | | | |
| CaO | | | | | | | | |
| SrO | | | | | | | | |
| Li₂O | | | | | | | | |
| Na₂O | | | | | | | | |
| K₂O | | | | | | | | |
| Al₂O₃ | | | | | | | | |
| Sb₂O₃ | 0.01 | 0.01 | 0.01 | 0.01 | 0.01 | 0.01 | 0.01 | 0.01 |
| Total | 100.0 | 100.0 | 100.0 | 100.0 | 100.0 | 100.0 | 100.0 | 100.0 |
| La+Gd+Y+Yb | 37.64 | 37.33 | 36.10 | 34.90 | 34.71 | 40.56 | 39.72 | 38.65 |
| Ti+Zr+W+Nb+Ta | 13.69 | 14.81 | 14.68 | 14.40 | 14.12 | 11.87 | 13.15 | 14.68 |
| Si+B | 17.80 | 23.61 | 18.35 | 18.48 | 17.64 | 20.96 | 20.76 | 20.30 |
| (Si+B)/(La+Gd+Y+Yb) | 0.473 | 0.632 | 0.508 | 0.530 | 0.508 | 0.517 | 0.523 | 0.525 |
| Ba/Si | 3.946 | 3.030 | 4.525 | 4.489 | 4.458 | 3.371 | 3.371 | 3.371 |
| Ti/(Si+B) | 0.275 | 0.103 | 0.294 | 0.392 | 0.403 | 0.428 | 0.450 | 0.419 |
| Gd+Y | 12.21 | 7.98 | 10.21 | 10.50 | 10.78 | 14.19 | 12.21 | 11.21 |
| Y/(La+Gd+Y+Yb) | 0.324 | 0.214 | 0.283 | 0.301 | 0.311 | 0.350 | 0.307 | 0.290 |
| Ba/(Si+B+Zn) | 1.734 | 1.027 | 1.682 | 1.743 | 1.900 | 1.270 | 1.270 | 1.299 |
| Mg+Ca+Sr+Ba | 30.86 | 24.24 | 30.86 | 32.22 | 33.52 | 26.61 | 26.36 | 26.36 |
| Li+Na+K | 0.00 | 0.00 | 0.00 | 0.00 | 0.00 | 0.00 | 0.00 | 0.00 |
| Refractive index (nd) | 1.833 | 1.806 | 1.829 | 1.832 | 1.833 | 1. 829 | 1.833 | 1.834 |
| Abbe number (vd) | 38.2 | 40.9 | 38.3 | 37.1 | 37.1 | 37.6 | 37.0 | 37.1 |
| Intercept b (a=0.0112) | 2.260 | 2.264 | 2.258 | 2.248 | 2.249 | 2.250 | 2.247 | 2.250 |
| Temperature coefficient of the relative refractive index [×10⁻⁶°C⁻¹] | 0.3 | 1.7 | 0.4 | 0.3 | 0.1 | 0.8 | 0.7 | 1.0 |
| Specific gravity | | 4.64 | | | | 4.63 | 4.67 | 4.72 |
| Powder method water resistance [class] | 1 | 1 | 1 | 1 | 1 | 1 | 1 | 1 |
| Liquidus temperature [°C] | | | | | | | | |

**[Table 17]**

| (Units: mass%) | Example | | | | |
|---|---|---|---|---|---|
| | B56 | B57 | B58 | B59 | B60 |
| SiO₂ | 7.82 | 6.56 | 7.00 | 9.00 | 13.68 |
| B₂O₃ | 10.93 | 9.16 | 11.46 | 14.61 | 8.37 |
| BaO | 30.86 | 28.71 | 30.02 | 23.35 | 27.01 |
| La₂O₃ | 25.49 | 23.93 | 19.36 | 29.35 | 20.65 |
| Gd₂O₃ | | | | 5.98 | |
| Y₂O₃ | 10.21 | 10.78 | 5.11 | 2.00 | 4.47 |
| ZrO₂ | 2.94 | 3.24 | 4.49 | 6.15 | 4.21 |
| Nb₂O₅ | 4.00 | 2.88 | 4.00 | 7.16 | 16.86 |
| WO₃ | 0.93 | | 0.85 | | 0.50 |
| TiO₂ | 6.82 | 7.10 | 17.72 | 2.00 | 0.97 |
| ZnO | | 0.89 | | | |
| MgO | | | | | |
| CaO | | | | | |
| SrO | | 4.81 | | | |
| Li₂O | | | | | |
| Na₂O | | | | | 1.99 |
| K₂O | | | | 0.40 | 1.27 |
| Al₂O₃ | | 1.92 | | | |
| Sb₂O₃ | 0.01 | 0.01 | | | 0.00 |
| Total | 1100.0 | 100.0 | 100.0 | 100.0 | 1100.0 |
| La+Gd+Y+Yb | 35.70 | 34.71 | 24.46 | 37.33 | 25.13 |
| Ti+Zr+W+Nb+Ta | 14.68 | 13.23 | 27.06 | 15.31 | 22.54 |
| Si+B | 18.75 | 15.72 | 18.46 | 23.61 | 22.05 |
| Ba/Si | 3.946 | 4.378 | 4.290 | 2.594 | 1.974 |
| Gd+Y | 10.21 | 10.78 | 5.11 | 7.98 | 4.47 |
| Y/(La+Gd+Y+Yb) | 0.286 | 0.311 | 0.209 | 0.054 | 0.178 |
| Ba/(Si+B+Zn) | 1.646 | 1.728 | 1.627 | 0.989 | 1.225 |
| Mg+Ca+Sr+Ba | 30.86 | 33.52 | 30.02 | 23.35 | 27.01 |
| Li+Na+K | 0.00 | 0.00 | 0.00 | 0.40 | 3.27 |
| Refractive index (nd) | 1.835 | 1.827 | 1.903 | 1.802 | 1.805 |
| Abbe number (vd) | 37.1 | 36.1 | 28.9 | 41.0 | 37.5 |
| Intercept b (a=0.0112) | 2.250 | 2.231 | 2.226 | 2.261 | 2.225 |
| Temperature coefficient of the relative refractive index [×10⁻⁶°C⁻¹] | 0.5 | 1.1 | 1.5 | 1.9 | 1.1 |
| Specific gravity | | 4.86 | 4.55 | 4.77 | 4.45 |
| Powder method water resistance [class] | 1 | 1 | 1 | 1 | 1 |
| Liquidus temperature [°C] | | | | | |

As shown in the tables, the optical glasses of the Examples all had a temperature coefficient of the relative refractive index within the range of +4.0 × 10⁻⁶ to -10.0 × 10⁻⁶ (°C⁻¹), which was within the desired range. In particular, the optical glasses of Examples (No. A1 to No. A60) all had a temperature coefficient of the relative refractive index within the range of +3.0 × 10⁻⁶ to -10.0 × 10⁻⁶ (°C⁻¹), more specifically within the range of ±2.0 × 10⁻⁶ (°C⁻¹) or less. Further, the optical glasses of Examples (No. B1 to No. B60) all had a temperature coefficient of the relative refractive index within the range of +3.0 × 10⁻⁶ to -1.0 × 10⁻⁶ (°C⁻¹). On the other hand, the glasses of the Comparative Examples (No. a, b) had a temperature coefficient of the relative refractive index of +7.2 × 10⁻⁶ (°C⁻¹), which is a high temperature coefficient of the relative refractive index.

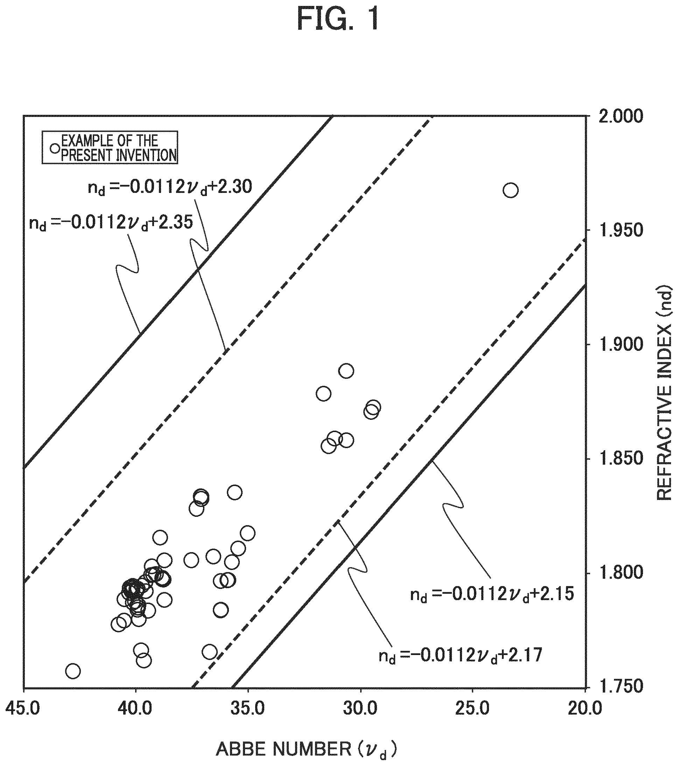

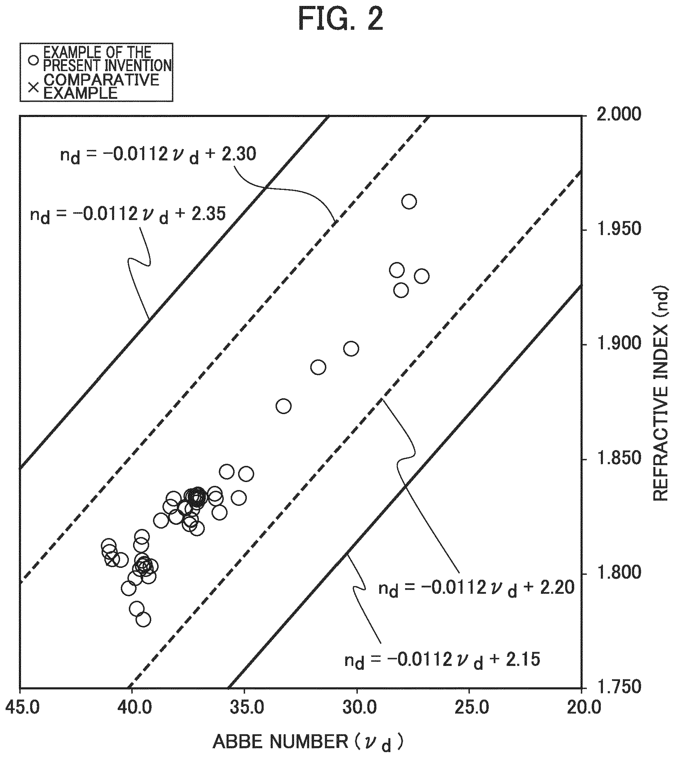

Further, the optical glasses of the Examples all had a refractive index (n_{d}) of 1.75 or more, and were within the desired range. In particular, the optical glasses of Examples (No. B1 to No. B60) all had a refractive index (n_{d}) of 1.78 or more. Further, the optical glasses of the Examples of the present invention all had an Abbe number (ν_{d}) within the range of 18 to 45, and were within the desired range. In particular, the optical glasses of Examples (No. A1 to No. A60) all had an Abbe number within the range of 23 to 43. Further, the optical glasses of Examples (No. B1 to No. B60) all had an Abbe number within the range of 18 to 42, more specifically within the range of 27 to 41. Further, for the optical glasses of Examples of the present invention, the refractive index (n_{d}) and Abbe number (ν_{d}) satisfied the relationship (-0.0112ν_{d} + 2.15) ≤ n_{d} ≤ (-0.0112ν_{d} + 2.35). In particular, for the optical glasses of Examples (No. A1 to A60), the refractive index (n_{d}) and Abbe number (ν_{d}) satisfied the relationship (-0.0112ν_{d} + 2.17) ≤ n_{d} ≤ (-0.0112ν_{d} + 2.26). Further, for the optical glasses of Examples (No. B1 to B60), the refractive index (n_{d}) and Abbe number (ν_{d}) satisfied the relationship (-0.0112ν_{d} + 2.21) ≤ n_{d} ≤ (-0.0112ν_{d} + 2.28). Further, the relationship between the refractive index (n_{d}) and Abbe number (ν_{d}) of the optical glasses of Examples (No. A1 to A60), is as shown in Fig. 1. Further, the relationship between the refractive index (n_{d}) and Abbe number (ν_{d}) of the optical glasses of Examples (No. B1 to B60), is as shown in Fig. 2.

Further, in particular, the optical glasses of Examples (No. B1 to B60) all had a specific gravity of 5.00 or less, more specifically 4.86 or less, and were within the desired range.

Further, in particular, the optical glasses of Examples (No. B1 to B60) all had a chemical resistance (water resistance) according to the powder method of the glass of class 1 to 3, more specifically class 1, and were within the desired range.

Further, the optical glasses of the Examples formed a stable glass, and devitrification did not readily occur when producing the glass. In particular, the optical glasses of Examples (No. B1 to B60) had a low liquidus temperature of 1200°C or less, more specifically 1170°C or less, and devitrification did not readily occur when producing the glass.

Accordingly, it became clear that the optical glasses of the Examples had a refractive index (n_{d}) and Abbe number (ν_{d}) within the desired range, and a low value of the temperature coefficient of the relative refractive index. In particular, it became clear that the optical glasses of Examples (No. B1 to B60) had a small specific gravity. From this, it can be surmised that the optical glasses of the Examples of the present invention may contribute to reducing the size and reducing the weight of optical systems used in high temperature environments such as optical devices for automobiles or projectors or the like, and further may contribute to correction of deviations and the like of the imaging characteristics due to temperature fluctuations. Further, in particular the optical glasses of Examples (No. B1 to B60) had a high water resistance, whereby it can be surmised that even when carrying out treatments such as cleaning or polishing or the like, tarnish of the glass does not readily occur.

Furthermore, using the optical glasses of the Examples of the present invention, glass blocks were formed, and by carrying out grinding and polishing of these glass blocks, they were processed into lenses and prisms. As a result, they could be stably processed into various lens and prism shapes.

The present invention was explained in detail with the objective of exemplification, but the examples of the present invention have only the intention of exemplification, and one skilled in the art could understand that many modifications are possible within the concept and scope of the present invention.

## Claims

1. An optical glass comprising, in mass%,
a B₂O₃ component of more than 0% to 35.0%,
a total Ln₂O₃ component (wherein Ln is one or more selected from the group consisting of La, Gd, Y, and Yb) of 1.0% to 50.0%,
a BaO component of 10.0% to 50.0%,
and comprising
a mass sum of TiO₂ + ZrO₂ + WO₃ + Nb₂O₅ + Ta₂O₅ of more than 0% to 50.0%, and
having a refractive index (n_{d}) of 1.75 or more, and an Abbe number (ν_{d}) of 18 to 45, and wherein
a temperature coefficient (40 to 60°C) of a relative refractive index (589.29 nm), is within the range of +4.0 × 10⁻⁶ to -10.0 × 10⁻⁶ (°C⁻¹).

2. An optical glass according to claim 1, wherein, in mass%,
a SiO₂ component is 0 to 25.0%,
a La₂O₃ component is 0 to 45.0%,
a Gd₂O₃ component is 0 to 23.0%,
a Y₂O₃ component is 0 to 27.0%,
a Yb₂O₃ component is 0 to 10.0%,
a ZrO₂ component is 0 to 15.0%,
an Nb₂O₅ component is 0 to 20.0%,
a WO₃ component is 0 to 10.0%,
a TiO₂ component is 0 to 38.0%,
a Ta₂O₅ component is 0 to 10.0%,
a ZnO component is 0 to less than 5.0%,
an MgO component is 0 to 10.0%,
a CaO component is 0 to 15.0%,
an SrO component is 0 to 17.0%,
a Li₂O component is 0 to 5.0%,
an Na₂O component is 0 to 10.0%,
a K₂O component is 0 to 10.0%,
a P₂O₅ component is 0 to 10.0%,
a GeO₂ component is 0 to 10.0%,
an Al₂O₃ component is 0 to 15.0%,
a Ga₂O₃ component is 0 to 10.0%,
a Bi₂O₃ component is 0 to 10.0%,
a TeO₂ component is 0 to 10.0%,
a SnO₂ component is 0 to 3.0%,
a Sb₂O₃ component is 0 to 1.0%,
and
wherein a content as F of a fluoride partially or completely substituting an oxide of one or two or more of each of the above elements is 0 to 10.0 mass%.

3. An optical glass according to claim 1 or 2, wherein a mass sum (SiO₂ + B₂O₃) is 6.0% to 37.0%.

4. An optical glass according to any one of claims 1 to 3, wherein a mass ratio (SiO₂ + B₂O₃)/Ln₂O₃ is 0.25 to 3.00 (wherein Ln is one or more selected from the group consisting of La, Gd, Y, and Yb) .

5. An optical glass according to any one of claims 1 to 4, wherein a mass ratio BaO/SiO₂ is 0.50 or more.

6. An optical glass according to any one of claims 1 to 5, wherein a mass ratio TiO₂/(SiO₂ + B₂O₃) is 0.05 to 3.00.

7. An optical glass according to any one of claims 1 to 6, wherein a mass ratio Y₂O₃/Ln₂O₃ is 0.10 to 0.70 (wherein Ln is one or more selected from the group consisting of La, Gd, Y, and Yb).

8. An optical glass according to any one of claims 1 to 7, wherein a mass ratio BaO/(SiO₂ + B₂O₃ + ZnO) is more than 0.30 to 4.00.

9. An optical glass according to any one of claims 1 to 8, wherein a sum of a content of an RO component (wherein R is one or more selected from the group consisting of Mg, Ca, Sr, Ba, and Zn), in mass%, is 10.0% to 55.0%.

10. An optical glass according to any one of claims 1 to 9, wherein a total content of an Rn₂O component (wherein Rn is one or more selected from the group consisting of Li, Na, and K), in mass%, is 10.0% or less.

11. A preform material consisting of an optical glass according to any one of claims 1 to 10.

12. An optical element consisting of an optical glass according to any one of claims 1 to 10.

13. An optical device provided with the optical element according to claim 12.
